# EUROPEAN PATENT SPECIFICATION

(11) **EP 1 760 112 B1**
(45) Date of publication and mention of the grant of the patent: **02.09.2009**
(21) Application number: 05741402.1
(22) Date of filing: 18.05.2005
(51) Int. Cl.: C08L 33/08, C08K 5/13, C08K 5/36, C08L 83/05

(54) **CURABLE COMPOSITION AND CURED PRODUCT THEREOF**
HÄRTBARE ZUSAMMENSETZUNG UND GEHÄRTETES PRODUKT DARAUS
COMPOSITION VULCANISABLE ET PRODUIT VULCANISÉ DE CELLE-CI

(30) Priority: 28.05.2004 JP 2004160106
(43) Date of publication of application: 07.03.2007
(73) Proprietor: Kaneka Corporation, Kita-ku Osaka-shi, Osaka 530-8288 (JP)
(72) Inventor: KOTANI, Jun c/oOsaka Plant, KANEKA CORPORATION,, 5660072 (JP); NAKAGAWA, Yoshiki Osaka Plant, KANEKA CORPORATION, 5660072 (JP)
(74) Representative: Hart-Davis, Jason
(86) International application number: PCT/JP2005/009052
(87) International publication number: WO 2005/116134

(56) References cited:
- EP-A2- 1 057 866
- WO-A-02/31043
- JP-A- 2000 154 255
- JP-A- 2002 105 263
- JP-A- 2003 113 324
- JP-A- 2004 059 783

## Description

### TECHNICAL FIELD

The present invention relates to a curable composition and a cured product thereof. More particularly, the invention relates to a curable composition which comprises an alkenyl group-containing vinyl polymer, a hydrosilyl group-containing compound, a hydrosilylation catalyst, a phenolic antioxidant and a sulfur-containing antioxidant as constituents and is capable of providing a cured product excellent in thermal aging resistance, and to a cured product thereof.

### BACKGROUND ART

Molded products whose main component is a vinyl polymer are obtained by kneading a high-molecular-weight polymer, together with various additives, in a molten state using a roll or mill etc. and molding the resulting composition. Among them, molded products made of an acrylic rubber whose main component is a (meth) acrylic polymer are obtained by kneading an uncured rubber (acrylic rubber) with such compounding ingredients as a filler and a curing agent and molding and curing the resulting compound with heating. On the occasion of kneading, however, such compound is poor in workability, adhering to the roll or hardly becoming smooth on the occasion of sheeting and, in addition, there are problems; namely, the compound is poor in processability, for example it is nonfluid on the occasion of molding, and is also poor in curability, showing a slow rate of curing and a tendency toward scorching (Non-Patent Document 1).

The use of (meth) acrylic polymers having a reactive functional group at a terminus of the molecule thereof is conceivable as a means for solving the problems mentioned above. It is expected that when such (meth) acrylic polymers having a reactive functional group at a terminus of the molecule are used, intercrosslinkage molecular weights can be efficiently obtained and the molecular weights of the main chains themselves can be reduced and, accordingly, the polymers can have good fluidity and, as a result, can be improved in proccessability. In addition, since such polymers have a reactive functional group at a terminus of the molecule, cured products high in intercrosslinkage molecular weight can be obtained and, therefore, it is expected that cured products excellent in such physical characteristics as elongation and hardness as compared with the conventional acrylic rubbers having a functional group on side chains thereof can be obtained. Therefore, industrial methods of producing (meth) acrylic polymers having a reactive functional group at a terminus of the molecule have been investigated by a number of researchers. For example, mention may be made of a method of synthesizing (meth) acrylic polymers having an alkenyl group at each of the both termini by using an alkenyl group-containing disulfide as a chain transfer agent (Patent Document 1). However, it is difficult to introduce an alkenyl group into each of the both termini without fail and, further, the copolymers obtained are latexes and have a problem in that a complicated operation is required for removing water on the occasion of use in manufacturing molded products. Also known is a method of synthesizing (meth) acrylic polymers having an alkenyl group at each of the both termini which comprises synthesizing a (meth) acrylic polymer having a hydroxyl group at each of the both termini by using a hydroxyl group-containing disulfide and further utilizing the reactivity of the hydroxyl group (Patent Document 2). This method also has problems; namely, it is difficult to introduce an alkenyl group into each of the both termini without fail and, further, a complicated procedure is required, for example a long period of post-curing is required because the curing is carried out using a peroxide.

For solving such problems, the present inventors have previously developed a method of producing alkenyl group-terminated (meth)acrylic polymers by converting the halogen atom of a (meth)acrylic polymer having a specific terminal structure, as obtained by the method of polymerization using an organic halide or the like as an initiator and a transition metal complex as a catalyst, to an alkenyl group-containing substituent (Patent Document 3), and enabled the production of such polymers on a commercial scale. They have also proposed molded products resulting from curing of a curable composition comprising an alkenyl group-terminated vinyl polymer and a hydrosilyl group-containing compound (Patent Document 4). Although the hydrosilylation reaction utilized for curing the curable composition comprising an alkenyl group-terminated vinyl polymer and a hydrosilyl group-containing compound is very low in reaction rate or fails to proceed substantially at low temperatures, the composition has a marked feature in that the composition is excellent in thermal curing potentiality and, upon heating, the reaction rapidly reaches to completion. Therefore, it is an advantage of such curable composition that cured products can be obtained rapidly without encountering scorching in the process of molding.

The curable composition comprising an alkenyl group-terminated (meth) acrylic polymer obtained by the method mentioned above (Patent Document 3) and the curable composition comprising an alkenyl group-terminated vinyl polymer and a hydrosilyl group-containing compound (Patent Document 4) are expected to be usable in various fields of use since the cured products obtained therefrom have good physical properties. However, the inventors realized that the problem discussed below should be solved before practical use of the compositions in various fields of application. It is known that the main chain of an alkenyl group-terminated vinyl polymer or (meth) acrylic polymer is a saturated hydrocarbon and therefore is excellent in thermal aging resistance. In some fields of application, however, the thermal aging resistance resulting from such alkenyl group-terminated vinyl polymer or (meth)acrylic polymer itself cannot be said to be sufficient; therefore, it is a general practice to add a phenolic antioxidant and/or an amine type antioxidant so as to improve the thermal aging resistance of such polymer. In the case of (meth)acrylic polymer-based acrylic rubbers, in particular, p, p'-dicumyldiphenylamine, which is an amine type antioxidant, shows a remarkable effect, as described in the literature (Non-Patent Document 2) . However, the addition of an amine type antioxidant often results in marked discoloration of the cured product obtained and thus it is a problem that the acrylic rubber compositions can hardly be used in those fields of use which require white formulations or transparency. Further, the use of phenolic antioxidants, which are known to be antioxidants inferior in antioxidant effect to amine type antioxidants but can inhibit discoloration, in vinyl polymers having a functional group at each of both termini has been disclosed (Patent Document 5). However, the addition of phenolic antioxidants is often insufficiently effective in inhibiting the discoloration of the cured products obtained, and the thermal aging resistance developable can hardly be said to sufficiently attain the desired level.
Patent Document 1: Japanese Kokai Publication Hei05-255415
Patent Document 2: Japanese Kokai Publication Hei05-262808
Patent Document 3: Japanese Kokai publication Hei09-272714
Patent Document 4: Japanese Kokai Publication 2000-154255
Patent Document 5: Japanese Kokai Publication 2003-113324
Non-Patent Document 1: Journal of the Society of Rubber Industry, Japan, Vol. 73, No. 10, page 555 (2000)
Non-Patent Document 2: "Shimpan Gomu Gijutsu no Kiso Kaiteiban (Fundamentals of Rubber Technology, Revised New Edition)", edited by the Society of Rubber Industry, Japan, pages 156 and 160

### SUMMARY OF THE INVENTION

It is an object of the present invention to provide a curable composition which comprises a vinyl polymer and can be cured by the hydrosilylation reaction to give cured products generally showing good mechanical characteristics, oil resistance and weather resistance, among others, and which can give cured products having such a high level of thermal aging resistance that can never be attained by the conventional manner of use of antioxidants.

The present inventors made intensive investigations in view of the above-discussed state of the art and, as a result, found that the above-mentioned problems can be alleviated by the combined use of a phenolic antioxidant and a sulfur-containing antioxidant and, based on such findings, they have completed the present invention.

Thus, the invention relates to
a curable composition
which comprises:
(A) A vinyl polymer (I) having, within the molecule, at least one alkenyl group capable of being hydrosilylated (hereinafter sometimes referred to as "vinyl polymer (I)" for short),
(B) A hydrosilyl group-containing compound (II),
(C) A hydrosilylation catalyst,
(D) A phenolic antioxidant, and
(E) A sulfur-containing antioxidant.

The invention also relates to
a cured product
which is obtained from the above curable composition.

### (Effect of the invention)

The curable composition of the invention is a curable composition which comprises a vinyl polymer capable of providing cured products generally showing good mechanical characteristics, oil resistance and weather resistance, among others, and can be cured by the hydrosilylation reaction, and the cured product obtained from the curable composition is excellent in thermal aging resistance, showing excellent physical properties such as hardness retention and discoloration resistance, in thermal aging resistance testing.

### DETAILED DESCRIPTION OF THE INVENTION

In the following, the curable composition of the invention and a cured product thereof is described in detail.

### <<Vinyl polymer (I)>>

### <Main chain>

The vinyl polymer (I) of the present invention is a vinyl polymer having, within the molecule, at least one alkenyl group capable of being hydrosilylated, and a vinyl monomer which constitutes the main chain of the vinyl polymer (I) is not particularly limited and any of various monomers can be used. Examples of the vinyl monomer include (meth) acrylic acid monomers, such as (meth) acrylic acid, methyl (meth) acrylate, ethyl (meth) acrylate, n-propyl (meth)acrylate, isopropyl (meth)acrylate, n-butyl (meth) acrylate, isobutyl (meth) acrylate, tert-butyl (meth) acrylate, n-pentyl (meth)acrylate, n-hexyl (meth)acrylate, cyclohexyl (meth) acrylate, n-heptyl (meth) acrylate, n-octyl (meth) acrylate, 2-ethylhexyl (meth) acrylate, nonyl (meth) acrylate, decyl (meth) acrylate, dodecyl (meth) acrylate, phenyl (meth) acrylate, tolyl (meth) acrylate, benzyl (meth) acrylate, 2-methoxyethyl (meth) acrylate, 3-methoxybutyl (meth) acrylate, 2-hydroxyethyl (meth) acrylate, 2-hydroxypropyl (meth)acrylate, stearyl (meth) acrylate, glycidyl (meth) acrylate, 2-aminoethyl (meth) acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth) acrylate, perfluoromethyl (meth) acrylate, diperfluoromethylmethyl (meth) acrylate, 2-perfluoromethyl-2-perfluoroethylmethyl (meth) acrylate, 2-perfluorohexylethyl (meth) acrylate, 2-perfluorodecylethyl (meth) acrylate, and 2-perfluorohexadecylethyl (meth) acrylate; aromatic vinyl monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These compounds may be used alone, or at least two may be copolymerized. Herein, the term "(meth)acrylic acid" means acrylic acid and/or methacrylic acid.

The main chain of the vinyl polymer (I) is preferably one produced by polymerizing predominantly at least one monomer selected from the group consisting of (meth) acrylic monomers, acrylonitrile monomers, aromatic vinyl monomers, fluorine-containing vinyl monomers and silicon-containing vinyl monomers. The term "predominantly" as used herein means that the above-mentioned monomer accounts for not less than 50 mole percent, preferably not less than 70 mole percent, of the monomer units constituting the vinyl polymer (I).

In particular, from the viewpoint of physical properties of a product, aromatic vinyl monomers and/or (meth)acrylic monomers are preferred. Acrylate monomers and methacrylate monomers are more preferred, acrylate monomers are further preferred. Specifically, particularly preferred acrylate monomers are ethyl acrylate, 2-methoxyethyl acrylate, stearyl acrylate, and butyl acrylate. In the present invention, these preferred monomers may be copolymerized, e.g., block-copolymerized, with another monomer. In this case, the content by weight of the preferred monomers is preferably 40% by weight or more.

In the present invention, the term "(meth)acrylic polymer" means a polymer in which (meth) acrylic monomer accounts for not less than 50 mole percent, preferably not less than 70 mole percent, of the monomer units constituting the vinyl polymer (I). In addition, in the present invention, the term "acrylic polymer" means a polymer in which acrylic monomer accounts for not less than 50 mole percent, preferably not less than 70 mole percent, of the monomer units constituting the vinyl polymer (I). Further, in the present invention, the term "acrylate polymer" means a polymer in which acrylate monomer accounts for not less than 50 mole percent, preferably not less than 70 mole percent, of the monomer units constituting the vinyl polymer (I).

The molecular weight distribution [ratio (Mw/Mn) of the weight average molecular weight (Mw) to the number average molecular weight (Mn) determined by gel permeation chromatography (GPC)] of the vinyl polymer (I) of the present invention is not particularly limited, but the ratio is preferably less than 1.8, more preferably 1.7 or less, further preferably 1.6 or less, further more preferably 1.5 or less, particularly preferably 1.4 or less, and most preferably 1.3 or less. In GPC measurement in the present invention, a number average molecular weight and the like may be determined in terms of polystyrene using chloroform as a mobile phase and a polystyrene gel column for measurement.

The number average molecular weight of the vinyl polymer (I) of the present invention is not particularly restricted, and preferably in a range of 500 to 1,000, 000 and more preferably 1,000 to 100, 000 with GPC. At excessively low molecular weight levels, the characteristic features intrinsic in the vinyl polymer (I) tend to be hardly manifested and, conversely, at excessively high levels, the polymer tends to become difficult to be handled.

### <Method of synthesizing the vinyl polymer (I)>

The vinyl polymer to be used in the practice of the invention can be obtained by various methods of polymerization without any particular restriction. Polymers obtained by radical polymerization are preferred, however, from the monomer versatility and easy controllability viewpoint. Among various modes of radical polymerization, controlled radical polymerization is more preferred, living radical polymerization is further preferred, and atom transfer radical polymerization is particularly preferred.

As for the method of alkenyl group introduction into the vinyl polymer obtained, there may be mentioned, among others, the method comprising direct alkenyl group introduction in the polymerization reaction system, and the method comprising synthesizing a specified functional group-containing vinyl polymer and converting the specified functional group into an alkenyl group in one or several reaction steps.

In the following, each of these methods of synthesis is described in detail.

### Radical polymerization

The method of synthesizing a functional group-containing vinyl polymer by radical polymerization includes two classes, "general radical polymerization" and "controlled radical polymerization".

"General radical polymerization" is a method comprising simply copolymerizing a specified functional group-containing vinyl monomer (hereinafter referred to as "functional monomer") and another vinyl monomer using a polymerization initiator such as an azo compound or peroxide. On the other hand, "controlled radical polymerization" is a method by which a specified functional group can be introduced into a specific controlled site such as a terminus.

### General radical polymerization

"General radical polymerization" is a simple and easy method and can be employed in the practice of the invention. Since, however, it is a sort of copolymerization, the specified functional group introduction into the polymer is only stochastic. Therefore, for obtaining a highly functionalized polymer, it is necessary to use the functional monomer in a fairly large amount; when the functional monomer is used in a small amount, a problem arises, namely the proportion of polymer molecules formed without introduction of the specified functional group thereinto increases. Another problem is that only polymers broad in molecular weight distribution and high in viscosity are obtained because the polymerization is free radical polymerization.

### Controlled radical polymerization

"Controlled radical polymerization" includes two subclasses, "chain transfer agent method" and "living radical polymerization".

"Chain transfer agent method" is **characterized in that** the polymerization is carried out using a chain transfer agent containing a specified functional group to give a functional group-terminated vinyl polymer. On the other hand, "living radical polymerization" is **characterized in that** the propagating polymer chain termini grow without undergoing such side reactions as termination reaction as a result of the use of a special polymerization system. Consequently, "living radical polymerization" can give polymers having a molecular weight almost as designed.

### Chain transfer agent method

As compared with "general radical polymerization", "chain transfer agent method" makes it possible to introduce the functional group quantitatively into a polymer terminus and therefore can be utilized also in the practice of the invention. Since, however, a considerably large amount of a chain transfer agent having the specified functional group, as compared with the initiator, is required, problems arise from the economical viewpoint, including such treatments as recovery of the chain transfer agent. Further, like in the above-mentioned "general radical polymerization", the method consists in free radical polymerization and thus produces the problem that the polymers obtained are broad in molecular weight distribution and high in viscosity.

The radical polymerization using the chain transfer agent (telomer) is not particularly limited, but examples of a process for producing a vinyl polymer having a terminal structure suitable for the present invention include the following two processes: A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

### Living radical polymerization

It is true that the radical polymerization has a high polymerization rate and is difficult to be controlled because termination reaction easily occurs due to radical coupling or the like. However, unlike in the above-mentioned processes, the living radical polymerization is, even though it is a radical polymerization, **characterized in that** termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization is capable of producing a polymer with a narrow molecular weight distribution and low viscosity and introducing a monomer having a specified functional group into a substantially desired position of the polymer. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The living polymerization in the present invention corresponds to the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943; a process using a radical capping agent such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these living radical polymerization processes, the atom transfer radical polymerization in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization is more preferred as a process for producing the vinyl polymer having a specified functional group. Examples of the atom transfer radical polymerization include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421 ; WO97/18247; WO98/01480; WO98/40415; Sawamoto, et al., Macromolecules, 1995, vol. 28, p. 1721; and Japanese Kokai Publication Hei-09-208616; Japanese Kokai Publication Hei-08-41117.

The atom transfer radical polymerization of the invention includes so called reverse atom transfer radical polymerization. The reverse atom transfer radical polymerization is a method comprising reacting an ordinary atom transfer radical polymerization catalyst in its high oxidation state resulting from radical generation, for example Cu (II') when Cu (I) is used as the catalyst, with an ordinary radical initiator, such as a peroxide, to thereby bring about an equilibrium state like in atom transfer radical polymerization (cf. Macromolecules, 1999, 32, 2872).

In the present invention, any one of these living radical polymerization processes may be used without limitation, but the atom transfer radical polymerization is preferred.

Next, the living radical polymerization will be described.

First, the process using a nitroxide compound and the like as a radical capping agent will be described. This polymerization generally uses stable nitroxy free radical (=N-O·) as a radical capping agent. Preferred examples of such a nitroxy free radical-containing compound include, but not limited to, nitroxy free radicals produced from cyclic hydroxyamines, such as 2, 2, 6, 6-substituted-1-piperidinyloxy radical and 2,2,5,5-substituted-1-piperidinyloxy radical. Herein, the term "substituted" means "a substituent", and as a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N, N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly serves as a polymerization initiator to promote polymerization of an addition-polymerizable monomer. The ratio between both agents used is not particularly limited, but the amount of the radical generator is preferably 0.1 to 10 moles per mole of the radical capping agent.

As the radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl)peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, 2993, the alkoxyamine compound shown below may be used as the initiator instead of a combination of the radical capping agent and the radical generator.

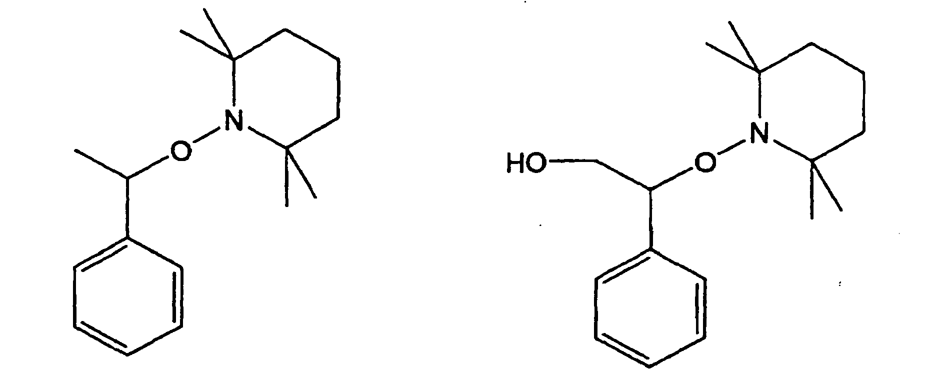

When the alkoxyamine compound is used as the initiator, the use of a compound having a functional group such as a hydroxyl group as shown in the above figure produces a polymer having the functional group at a terminus. When this compound is used in the method of the present invention, a polymer having the functional group at a terminus is produced.

The conditions of polymerization using the nitroxide compound and/or the like as the radical capping agent, such as the monomer, the solvent, the polymerization temperature, and the like, are not limited. However, these conditions may be the same as those in atom transfer radical polymerization which will be described below.

### Atom transfer radical polymerization

In the present invention, the living radical polymerization preferably used for producing the main chain of the vinyl polymer (I) is the atom transfer radical polymerization, and the atom transfer radical polymerization will be described below.

The atom transfer radical polymerization preferably uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound. Specific examples of such a compound include the following:
C₆H₅-CH₂X, C₆H₅-C(H)(X)CH₃, and C₆H₅-C(X)(CH₃)₂
(wherein C₆H₅ is a phenyl group, X is chlorine, bromine, or iodine);
R³-C(H)(X)-CO₂R⁴, R³-C(CH₃)(X)-CO₂R⁴, R³-C(H)(X)-C(O)R⁴, and R³-C(CH₃)(X)-C(O)R⁴
(wherein R³ and R⁴ each is a hydrogen atom or an alkyl group, an aryl group, or an aralkyl group having 1 to 20 carbon atoms; X is chlorine, bromine, or iodine); and
R³-C₆H₄-SO₂X
(wherein R³ is a hydrogen atom or an alkyl group, an aryl group, or an aralkyl group having 1 to 20 carbon atoms; X is chlorine, bromine, or iodine).

By carrying out the atom transfer radical polymerization of a vinyl monomer using an organic halide or a sulfonyl halide compound as an initiator, it becomes possible to obtain vinyl polymers having a terminal structure represented by the general formula (1):

-C(R¹)(R²)(X) (1)

(wherein R¹ and R² each represents the group bound to the ethylenically unsaturated group in the vinyl monomer mentioned above, and X represents chlorine, bromine, or iodine.)

As the initiator in the atom transfer radical polymerization, an organic halide or halogenated sulfonyl compound having a functional group, which initiates polymerization, as well as a specified functional group, which does not initiate polymerization, can be used. In this case, the resultant vinyl polymer has the specified functional group at one of the main chain termini and a terminal structure represented by the general formula 1 at the other terminus. Examples of such a specified functional group include alkenyl, crosslinkable silyl, hydroxyl, epoxy, amino, and amido groups.

Examples of an organic halide having an alkenyl group as a specified functional group include, but not limited to, compounds having a structure represented by the general formula 2:

R⁶R⁷C(X)-R⁸-R⁹-C(R⁵)=CH₂ (2)

(wherein R⁵ is a hydrogen atom or a methyl group; R⁶ and R⁷ each is a hydrogen atom, a monovalent alkyl group, an aryl group or an aralkyl group having 1 to 20 carbon atoms, or R⁶ and R⁷ are bonded together at the other termini; R⁸ is -C(O)O- (ester group), -C(O)- (keto group), or an o- , m-, or p-phenylene group; R⁹ is a direct bond or a divalent organic group having 1 to 20 carbon atoms, which may contain at least one ether bond; and X is chlorine, bromine, or iodine).

Specific examples of substituents R⁶ and R⁷ in the general formula 2 include hydrogen, methyl, ethyl, n-propyl, isopropyl, butyl, pentyl, and hexyl groups. Substituents R⁶ and R⁷ may be bonded together at the other termini to form a cyclic skeleton.

Specific examples of the organic halide having an alkenyl group represented by the general formula 2 may be the following, for example:

XCH₂C(O)O(CH₂)ₙCH=CH₂,

H₃CC(H)(X)C(O)O(CH₂)ₙCH=CH₂,

(H₃C)₂C(X)C(O)O(CH₂)ₙCH=CH₂,

CH₃CH₂C(H)(X)C(O)O(CH₂)ₙCH=CH₂,

and 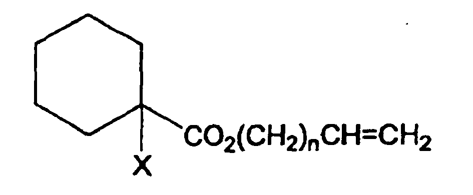 (wherein X is chlorine, bromine, or iodine, and n is an integer of 0 to 20);

XCH₂C(O)O(CH₂)ₙO(CH₂)ₘCH=CH₂,

H₃CC(H)(X)C(O)O(CH₂)ₙO(CH₂)ₘCH=CH_{2,}

(H₂C)₂C(X)C(O)O(CH₂)ₙO(CH₂)ₘCH=CH_{2,}

CH₃CH₂C(H)(X)C(O)O(CH₂)ₙO(CH₂)ₘCH=CH₂,

and

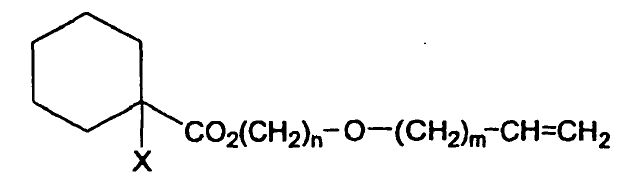

(wherein X is chlorine, bromine, or iodine, n is an integer of 1 to 20, and m is an integer of 0 to 20);

o, m, p-XCH₂-C₆H₄-(CH₂)ₙ-CH=CH₂,
o, m, p-CH₃C(H)(X)-C₆H₄-(CH₂)ₙ-CH=CH₂, and
o, m, p-CH₃CH₂C(H)(X)-C₆H₄-(CH₂)ₙ-CH=CH₂
(wherein X is chlorine, bromine, or iodine, and n is an integer of 0 to 20);
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and
O, m, p-CH₃CH₂C(H)(X)-C₆H₄-(CH₂)ₙ-O-(CH₂)ₘCH=CH₂
(wherein X is chlorine, bromine, or iodine, n is an integer of 1 to 20, and m is an integer of 0 to 20);
O, m, p-XCH₂-C₆H₄-O-(CH₂)ₙ-CH=CH₂,
o, m, p-CH₃C(H)(X)-C₆H₄-O-(CH₂)ₙ-CH=CH₂, and
o, m, p-CH₃CH₂C(H)(X)-C₆H₄-O-(CH₂)ₙ-CH=CH₂
(wherein X is chlorine, bromine, or iodine, and n is an integer of 0 to 20) ; and
o, m, p-XCH₂-C₆H₄-O-(CH₂)ₙ-O-(CH₂)ₘ-CH=CH₂,
o, m, p-CH₃C(H)(X)-C₆H₄-O-(CH₂)ₙ-O-(CH₂)ₘ-CH=CH₂, and
o, m, p-CH₃CH₂C(H)(X)-C₆H₄-O-(CH₂)n-O-(CH₂)ₘ-CH=CH₂
(wherein X is chlorine, bromine, or iodine, n is an integer of 1 to 20, and m is an integer of 0 to 20) .

Other examples of the organic halide having an alkenyl group include compounds represented by the general formula 3:

H₂C=C(R⁵)-R⁹-C(R⁶)(X)-R¹⁰-R⁷ (3)

(wherein R⁵, R⁶, R⁷, R⁹, and X represent the same as above, and R¹⁰ represents a direct bond or -C(O)O- (ester group), -C(O)-(keto group), or an o-, m-, or p-phenylene group).

R⁹ in the general formula 3 is a direct bond or a divalent organic group having 1 to 20 carbon atoms (which may contain at least one ether bond). When R⁹ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as R¹⁰, and a direct bond may be present. When R⁹ is not a direct bond, R³ is preferably a C(O)O, C(O), or phenylene group for activating the carbon-halogen bond.

Specific examples of the compounds represented by the general formula 3 include the following:
CH₂=CHCH₂X, CH₂=C(CH₃)CH₂X, CH₂=CHC(H)(X)CH₃, CH₂=C(CH₃)C(H)(X)CH₃, CH₂=CHC(X)(CH₃)₂, CH₂=CHC(H)(X)C₂H₅, CH₂=CHC(H)(X)CH(CH₃)₂, CH₂=CHC(H)(X)C₆H₅, CH₂=CHC(H)(X)CH₂C₆H₅, CH₂=CHCH₂C(H)(X)-CO₂R, CH₂=CH(CH₂)₂C(H)(X)-CO₂R, CH₂=CH(CH₂)₃C(H)(X)-CO₂R, CH₂=CH(CH₂)₈C(H)(X)-CO₂R, CH₂=CHCH₂C(H)(X)-C₆H₅, CH₂=CH(CH₂)₂C(H)(X)-C₆H_{5,} and CH₂=CH(CH₂)₃C(H)(X)-C₆H₅
(wherein X is chlorine, bromine, or iodine, and R is an alkyl, aryl, or aralkyl group having 1 to 20 carbon atoms).

Specific examples of the halogenated sulfonyl compound having an alkenyl group include the following:
o-, m-, p-CH₂=CH-(CH₂)ₙ-C₆H₄-SO₂X, and
o-, m-, p-CH₂=CH-(CH₂)ₙ-O-C₆H₄-SO₂X
(wherein X is chlorine, bromine, or iodine, and n is an integer of 0 to 20).

Specific examples of the organic halide having a crosslinkable silyl group as a specified functional group include, but not particularly limited to, compounds having a structure represented by the general formula 4:

R⁶R⁷C(X)-R⁸-R⁹-C(H)(R⁵)CH₂-[Si(R¹¹)_{2-b}(Y)_{b}O]ₘ-Si(R¹²)₃₋ₐ(Y)ₐ (4)

(wherein R⁵ R⁶, R⁷, R⁸, R⁹ and X represent the same as above, and R¹¹ and R¹² each is the same or different and each represents an alkyl group, an aryl group, or an aralkyl group having 1 to 20 carbon atoms, or a triorganosiloxy group represented by (R')₃SiO- (the three R's each is a monovalent hydrocarbon group having 1 to 20 carbon atoms and may be the same or different) ; when two or more groups R¹¹ or R¹² are present, they may be the same or different; Y represents a hydroxyl group or a hydrolyzable group, and when two or more groups Y are present, they may be the same or different; a represents 0, 1, 2, or 3; b represents 0, 1, or 2; m is an integer of 0 to 19; and a + mb ≥1 is satisfied).

Specific examples of the compounds represented by the general formula 4 include the following:

XCH₂C(O)O(CH₂)ₙSi(OCH₃) ₃,

CH₃C(H)(X)C(O)O(CH₂)ₙSi(OCH₃)₃,

(CH₃)₂C(X)C(O)O(CH₂)ₙSi(OCH₃)₃,

XCH₂C(O)O(CH₂)ₙSi(CH₃)(OCH₃)₂,

CH₃C(H)(X)C(O)O(CH₂)ₙSi(CH₃)(OCH₃)₂,

and

(CH₃)₂C(X)C(O)O(CH₂)ₙSi(CH₃)(OCH₃)₂

(wherein X is chlorine, bromine, or iodine, and n is an integer of 0 to 20);

XCH₂C(O)O(CH₂)ₙO(CH₂)ₘSi(OCH₃)₃,

H₃CC(H)(X)C(O)O(CH₂)ₙO(CH₂)ₘSi(OCH₃)₃,

(H₃C)₂C(X)C(O)O(CH₂)ₙO(CH₂)ₘSi(OCH₃)₃,

CH₃CH₂C(H)(X)C(O)O(CH₂)ₙO(CH₂)ₘSi(OCH₃)₃,

XCH₂C(O)O(CH₂)ₙO(CH₂)ₘSi(CH₃)(OCH₃)₂,

H₃CC(H)(X)C(O)O(CH₂)ₙO(CH₂)ₘ-Si(CH₃)(OCH₃)₂,

(H₃C)₂C(X)C(O)O(CH₂)ₙO(CH₂)ₘ-Si(CH₃)(OCH₃)₂,

and

CH₃CH₂C(H)(X)C(O)O(CH₂)ₙO(CH₂)ₘ-Si(CH₃)(OCH₃)₂,

(wherein X is chlorine, bromine, or iodine, n is an integer of 1 to 20, and m is an integer of 0 to 20); and
o, m, p-XCH₂-C₆H₄-(CH₂)₂Si(OCH₃)₃,
o, m, p-CH₃C(H)(X)-C₆H₄-(CH₂)₂Si(OCH₃)₃,
o, m, p-CH₃CH₂C(H)(X)-C₆H₄-(CH₂)₂Si(OCH₃)₃,
o, m, p-XCH₂-C₆H₄-(CH₂)₃Si(OCH₃)₃,
o, m, p-CH₃C(H)(X)-C₆H₄-(CH₂)₃Si(OCH₃)₃,
o, m, p-CH₃CH₂C(H)(X)-C₆H₄-(CH₂)₃Si(OCH₃)₃,
o, m, p-XCH₃-C₆H₄-(CH₂)₂-O-(CH₂)₃Si(OCH₃)₃,
o, m, p-CH₃C(H)(X)-C₆H₄-(CH₂)₂-O-(CH₃)₃Si(OCH₃)₃,
o, m, p-CH₃CH₂C(H)(X)-C₆H₄-(CH₂)₂-O-(CH₂)₃Si(OCH₃)₃,
o, m, p-XCH₂-C₆H₄-O-(CH₂)₃Si(OCH₃)₃,
o, m, p-CH₃C(H)(X)-C₆H₄-O-(CH₂)₃Si(OCH₃)₃,
o, m, p-CH₃CH₂C(H)(X)-C₆H₄-O-(CH₂)₃-Si(OCH₃)₃,
o, m, p-XCH₂-C₆H₄-O-(CH₂)₂-O-(CH₂)₃-Si(OCH₃)₃,
o, m, p-CH₃C(H)(X)-C₆H₄-O-(CH₂)₂-O-(CH₂)₃Si(OCH₃)₃, and
o, m, p-CH₃CH₂C(H)(X)-C₆H₄-O-(CH₂)₂-O-(CH₂)₃Si(OCH₃)₃
(wherein X is chlorine, bromine, or iodine).

Other examples of the organic halide having a crosslinkable silyl group as a specified functional group include compounds having a structure represented by the general formula 5:

(R¹²)₃₋ₐ(Y)ₐSi-[OSi(R¹¹)_{2-b}(Y)_{b}]ₘ-CH₂-C(H)(R⁵)-R⁹-C(R⁶)(X)-R¹⁰-R⁷ (5)

(wherein R⁵, R⁶, R⁷, R⁹, R¹⁰, R¹¹, R¹², a, b, m, X and Y represent the same as above).

Specific examples of such compounds include the following:

(CH₃O)₃SiCH₂CH₂C(H)(X)C₆H₅,

(CH₃O)₂(CH₃)SiCH₂CH₂C(H)(X)C₆H₅,

(CH₃O)₃Si(CH₂)₂C(H)(X)-CO₂R,

(CH₃O)₂(CH₃)Si(CH₂)₂C(H)(X)-CO₂R,

(CH₃O)₃Si(CH₂)₃C(H) (X)-CO₂R,

(CH₃O)₂(CH₃)Si(CH₂)₃C(H)(X)-CO₂R,

(CH₃O)₃Si(CH₂)₄C(H)(X)-CO₂R,

(CH₃O)₂(CH₃)Si(CH₂)₄C(H)(X)-CO₂R,

(CH₃O)₃Si(CH₂)₉C(H)(X)-CO₂R,

(CH₃O)₂(CH₃)Si(CH₂)₉C(H)(X)-CO₂R,

(CH₃O)₃Si(CH₂)₃C(H)(X)-C₆H₅,

(CH₃O)₂(CH₃)Si(CH₂)₃C(H)(X)-C₆H₅,

(CH₃O)₃Si(CH₂)₄C(H)(X)-C₆H₅,

and

(CH₃O)₂(CH₃)Si(CH₂)₄C(H)(X)-C₆H₅

(wherein X is chlorine, bromine, or iodine, and R is an alkyl, aryl, or aralkyl group having 1 to 20 carbon atoms).

Examples of the organic halide or halogenated sulfonyl compound having a hydroxyl group as a specified functional group include, but not particularly limited to, the following:

HO-(CH₂)ₙ-OC(O)C(H)(R)(X)

(wherein X is chlorine, bromine, or iodine, R is a hydrogen atom or an alkyl, aryl, or aralkyl group having 1 to 20 carbon atoms, and n is an integer of 1 to 20).

Examples of the organic halide or halogenated sulfonyl compound having an amino group as a specified functional group include, but not particularly limited to, the following:

H₂N-(CH₂)ₙ-OC(O)C(H)(R)(X)

(wherein X is chlorine, bromine, or iodine, R is a hydrogen atom or an alkyl, aryl, or aralkyl group having 1 to 20 carbon atoms, and n is an integer of 1 to 20).

Examples of the organic halide or halogenated sulfonyl compound having an epoxy group as a specified functional group include, but not particularly limited to, the following: 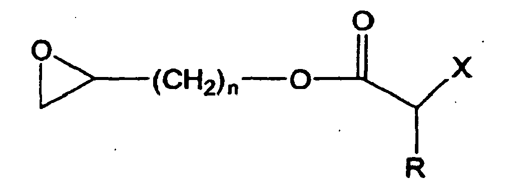 (wherein X is chlorine, bromine, or iodine, R is a hydrogen atom or an alkyl, aryl, or aralkyl group having 1 to 20 carbon atoms, and n is an integer of 1 to 20).

In order to obtain a polymer having at least two terminal structures of the invention per molecule, an organic halide or halogenated sulfonyl compound having at least two initiation points is preferably used as the initiator. Examples of such a compound include the following
o,m,p-X-CH₂-C₆H₄-CH₂-X 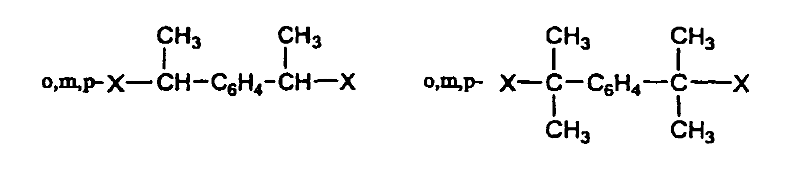 (wherein C₆H₄ is a phenylene group, and X is chlorine, bromine, or iodine.) 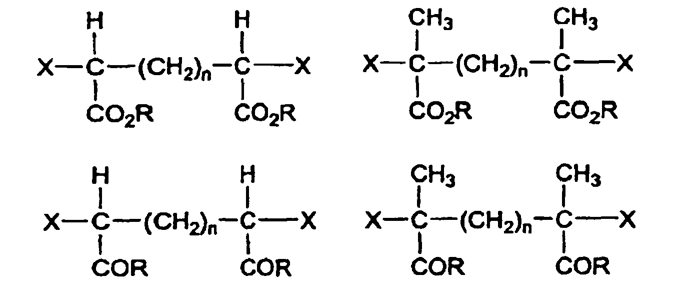 (wherein R is an alkyl, aryl, or aralkyl group having 1 to 20 carbon atoms, n is an integer of 0 to 20, and X is chlorine, bromine, or iodine.) 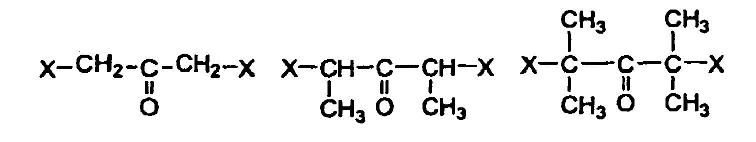 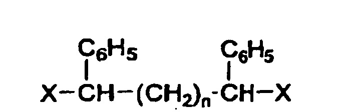 (wherein X is chlorine, bromine, or iodine, and n is an integer of 0 to 20.) 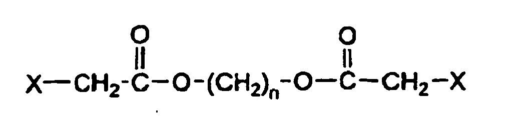 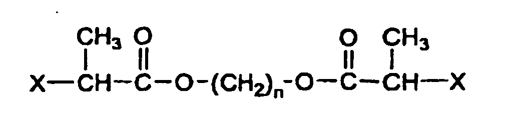 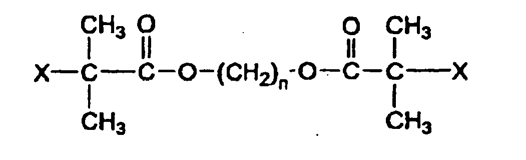 (wherein n is an integer of 1 to 20, and X is chlorine, bromine, or iodine.) 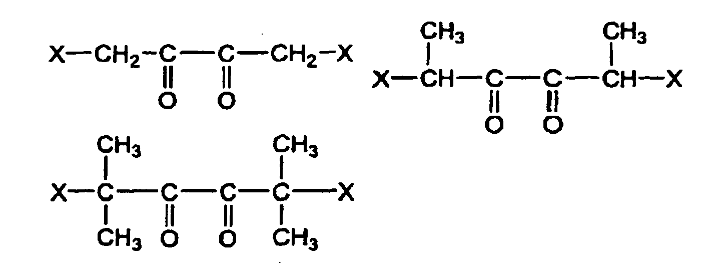 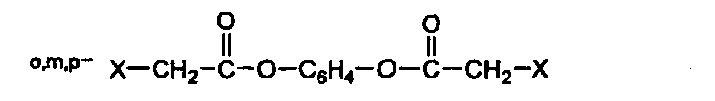 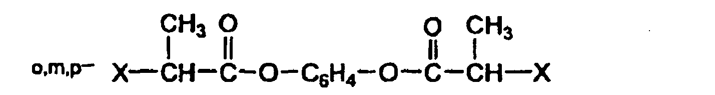 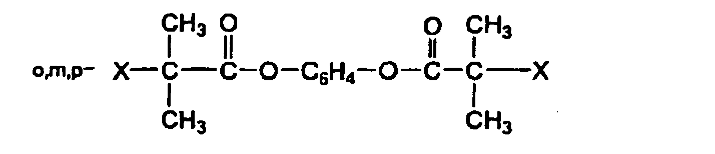 o,m,p⁻ X-SO₂-C₆H₄-SO₂-X
(wherein X is chlorine, bromine, or iodine.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A transition metal complex of zero-valent copper, monovalent copper, divalent ruthenium, divalent iron, or divalent nickel is more preferred. Among these complexes, a copper complex is preferred. Specific examples of the monovalent copper compound to be used for forming a copper complex include cuprous chloride, cuprous bromide, cuprous iodide, cuprous cyanide, cuprous oxide, and cuprous perchlorate. When the copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris(2-aminoethyl)amine, is added for increasing catalyst activity. Also, a tristriphenylphosphine complex (RuCl₂(PPh₃)₃) of divalent ruthenium chloride is suitable as the catalyst. When the ruthenium compound is used as a catalyst, an aluminum alkoxide is added as an activator. Furthermore, a bistriphenylphosphine complex (FeCl₂(PPh₃)₂) of divalent iron, a bistriphenylphosphine complex (NiCl₂(PPh₃)₂) of divalent nickel, or a bistributylphosphine complex (NiBr₂(PBu₃)₂) of divalent nickel is preferred as the catalyst.

The polymerization reaction can be performed without a solvent or in any of various solvents. The solvents are not particularly limited, and examples of these include hydrocarbon solvents, such as benzene and toluene; ether solvents, such as diethyl ether, tetrahydrofuran, diphenyl ether, anisole, and dimethoxybenzene; halogenated hydrocarbon solvents, such as methylene chloride, chloroform, and chlorobenzene; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; carbonate solvents, such as ethylene carbonate and propylene carbonate; and amide solvents, such as N,N-dimethylformamide and N,N-dimethylacetamide. These solvents can be used alone or as a mixture of two or more. The polymerization can be performed in an emulsion system or a system using a supercritical fluid CO₂ as a medium.

The polymerization can be performed in a range of 0°C to 200°C, and preferably room temperature to 150°C without any purpose of restriction.

### <Alkenyl group capable of being hydrosilylated>

### Alkenyl group

The alkenyl group contained in the vinyl polymer (I) to be used in the practice of the invention and capable of being hydrosilylated is not restricted but preferably is one represented by the general formula 6:

H₂C=C(R¹³)- (6)

(wherein, R¹³ represents a hydrogen atom or an organic group having 1 to 20 carbon atoms.)

In the general formula 6, R¹³ is a hydrogen atom or an organic group having 1 to 20 carbon atoms. The organic group having 1 to 20 carbon atoms is not particularly restricted but preferably is an alkyl group having 1 to 20 carbon atoms, an aryl group having 6 to 20 carbon atoms, or an aralkyl group having 7 to 20 carbons atoms, and such groups as given below may be mentioned as specific examples;
-(CH₂)ₙ-CH₃, -CH(CH₃)-(CH₂)ₙ-CH₃, -CH(CH₂CH₃)-(CH₂)ₙ-CH₃, -CH(CH₂CH₃)₂, -C(CH₃)₂-(CH₂)ₙ-CH₃, -C(CH₃)(CH₂CH₃)-(CH₂)ₙ-CH₂, -C₆H₅, -C₆H₄(CH₃), -C₆H₃(CH₃)₂, -(CH₂)ₙ-C₆H₅, -(CH₂)-C₆H₄(CH₃) and -(CH₂)ₙ-C₆H₃(CH₃)_{2.}
(n represents an integer not smaller than 0 and the total number of carbon atoms in each group is not greater than 20.)

Among them, a hydrogen atom or a methyl group is preferred as R¹³ in view of the reactivity in hydrosilylation.

Further, preferably, the alkenyl group in the vinyl polymer (I) is not activated by a carbonyl group, alkenyl group or aromatic ring conjugated with the carbon-carbon double bond in the alkenyl group, although this is not a necessary condition.

The mode of bonding between the alkenyl group and the main chain of the vinyl polymer (I) is not particularly restricted but both are preferably bound to each other via such a bond as a carbon-carbon bond, ester bond, ether bond, carbonate bond, amide bond or urethane bond.

### Position of alkenyl group

In cases where the cured products obtained from the curable composition of the present invention are especially required to have rubber-like properties, it is preferred that at least one of alkenyl groups be positioned at a terminus of the molecular chain so that the molecular weight between crosslinking sites, which has a great influence on the rubber elasticity, can be increased. More preferably, all alkenyl groups are located at molecular chain termini.

Methods of producing vinyl polymers, in particular (meth) acrylic polymers, having at least one alkenyl group such as mentioned above at a molecular terminus thereof are disclosed in Japanese Kokoku Publication Hei-03-14068, Japanese Kokoku Publication Hei-04-55444 and Japanese Kokai Publication Hei-06-211922, among others. However, these methods are free radical polymerization methods in which the above-mentioned "chain transfer agent methods" is used and, therefore, the polymers obtained have problems, namely they generally show a molecular weight distribution (Mw/Mn) as wide as not less than 2 as well as a high viscosity, although they have alkenyl groups in relatively high proportions at molecular chain termini. Therefore, for obtaining vinyl polymers showing a narrow molecular weight distribution and a low viscosity and having alkenyl groups in high proportions at molecular chain termini, the above-described "living radical polymerization method" is preferably used.

### <Alkenyl group introduction method>

In the following, several methods of alkenyl group introduction into a vinyl polymer are described without any purpose of restriction.

### Method of introducing alkenyl group

(A-a) Method comprising subjecting to reaction a compound having both a polymerizable alkenyl group and a low polymerizability alkenyl group within the molecule, such as one represented by the general formula 7 shown below as a second monomer in synthesizing a vinyl polymer by radical polymerization, preferably living radical polymerization:

H₂C=C(R¹⁴)-R¹⁵-R¹⁶-C(R¹⁷)=CH₂ (7)

(wherein R¹⁴ represents a hydrogen atom or a methyl group, R¹⁵ represents -C(O)O- or an o-, m- or p-phenylene group, R¹⁶ represents a direct bond or a divalent organic group containing 1 to 20 carbon atoms, which may contain one or more ether bonds, and R¹⁷ represents a hydrogen atom or an organic group having 1 to 20 carbon atoms).

In the general formula 7, R¹⁷ is a hydrogen atom or an organic group having 1 to 20 carbon atoms. The organic group having 1 to 20 carbon atoms is not particularly restricted but preferably is an alkyl group having 1 to 20 carbon atoms, an aryl group having 6 to 20 carbon atoms, or an aralkyl group having 7 to 20 carbons atoms, and such groups as given below may be mentioned as specific examples;
-(CH₂)ₙ-CH₃, -CH(CH₃)-(CH₂)ₙ-CH₃, -CH(CH₂CH₃)-(CH₂)ₙ-CH₃, -CH(CH₂CH₃)₂, -C(CH₃)₂-(CH₂)ₙ-CH₃, -C(CH₃)(CH₂CH₃)-(CH₂)ₙ,-CH₃, -C₆H₅, -C₆H₄(CH₃), -C₆H₃(CH₃)₂, -(CH₂)ₙ-C₆H₅, -(CH₂)ₙ-C₆H₄(CH₃) and -(CH₂)ₙ-C₆H₃(CH₃)₂.
(n represents an integer not smaller than 0 and the total number of carbon atoms in each group is not greater than 20.)

Among them, a hydrogen atom or a methyl group is preferred as R¹⁷.

The time when the compound having both a polymerizable alkenyl group and a low polymerizability alkenyl group within the molecule is subjected to reaction is not particularly restricted but, when the cured product to be obtained is expected to have rubber-like properties, the compound is preferably subjected to reaction as a second monomer in the final stage of polymerization reaction or after completion of the reaction of the employed monomers in living radical polymerization.

(A-b) Method comprising subjecting to reaction a compound having at least two low polymerizability alkenyl groups, for example 1,5-hexadiene, 1,7-octadiene or 1,9-decadiene, in the final stage of polymerization or after completion of the reaction of the monomers employed in vinyl polymer synthesis by living radical polymerization.

(A-c) Method comprising reacting a vinyl polymer having at least one highly reactive carbon-halogen bond with one of various alkenyl-containing organometallic compounds, for example an organotin such as allyltributyltin or allyltrioctyltin, for substitution of the halogen.

(A-d) Method comprising reacting a vinyl polymer having at least one highly reactive carbon-halogen bond with a stabilized, alkenyl-containing carbanion such as one represented by the general formula 8, for substitution of the halogen:

M⁺C⁻(R¹⁸)(R¹⁹)-R²⁰-C(R¹⁷)=CH₂ (8)

(wherein R¹⁷ is as defined above, R¹⁸ and R¹⁹ each is an electron-withdrawing group capable of stabilizing the carbanion C⁻ or one of them is such an electron-withdrawing group and the other represents a hydrogen atom, an alkyl group having 1 to 10 carbon atoms or a phenyl group, R²⁰ represents a direct bond or a divalent organic group having 1 to 10 carbon atoms, which may contain one or more ether bonds, and M⁺ represents an alkali metal ion or a quaternary ammonium ion).

As the electron-withdrawing group R¹⁸ and/or R¹⁹ in the general formula 8, there may be mentioned, for example, -CO₂R (ester group), -C(O)R (keto group), -CON(R₂) (amido group), -COSR (thioester group), -CN (nitryl group), and -NO₂ (nitro group), and particularly preferred are -CO₂R, -C(O)R and -CN. In these formulae, the substituent R is an alkyl group having 1 to 20 carbon atoms, an aryl group having 6 to 20 carbon atoms, or an aralkyl group having 7 to 20 carbons atoms, and preferably an alkyl group having 1 to 10 carbon atoms or a phenyl group.

(A-e) Method comprising reacting a vinyl polymer having at least one highly reactive carbon-halogen bond with a simple substance metal, such as zinc, or an organometallic compound and then reacting the thus-prepared enolate anion with an alkenyl-containing, electrophilic compound, such as an alkenyl-containing compound having a leaving group such as a halogen atom or an acetyl group, an alkenyl-containing carbonyl compound, an alkenyl-containing isocyanate compound or an alkenyl-containing acid halide.

(A-f) Method comprising reacting a vinyl polymer having at least one highly reactive carbon-halogen bond with an alkenyl-containing oxy anion or carboxylate anion such as one represented by the general formula 9 or 10, for substitution of the halogen:

H₂C=C(R¹⁷)-R²¹-O⁻M⁺ (9)

(wherein R¹⁷ and M⁺ are as defined above and R²¹ is a divalent organic group having 1 to 20 carbon atoms, which may contain one or more ether bonds) ;

H₂C=(R¹⁷)-R²²-C(O)O⁻M⁺ (10)

(wherein R¹⁷ and M⁺ are as defined above and R²² is a direct bond or a divalent organic group having 1 to 20 carbon atoms, which may contain one or more ether bonds).

In cases where no halogen is directly involved in such a method of alkenyl group introduction as (A-a) or (A-b) in the practice of the invention, the vinyl polymer is preferably synthesized by living radical polymerization, more preferably by atom transfer radical polymerization.

In those methods which utilize a vinyl polymer having at least one highly reactive carbon-halogen bond, as mentioned above under (A-c) to (A-f), the vinyl polymer having at least one highly reactive carbon-halogen bond is preferably synthesized by chain transfer polymerization using a halogen compound as a chain transfer agent or by atom transfer radical polymerization using an organic halide or sulfonyl halide compound as an initiator, more preferably by atom transfer radical polymerization.

Among the methods (A-a) to (A-f), the method (A-b) is preferred from the easier controllability viewpoint. In the following, the introduction method (A-b) is described in detail.

### Diene compound addition method [method (A-b)]

The method (A-b) is **characterized in that** the vinyl polymer obtained by living radical polymerization of a vinyl monomer is reacted with a compound containing at least two low-polymerizability alkenyl groups (hereinafter referred to as "diene compound").

The at least two alkenyl groups in the diene compound may be the same or different. Each alkenyl group may be either a terminal alkenyl group [CH₂=C(R)-R' in which R is a hydrogen atom or an organic group having 1 to 20 carbon atoms and R' is an organic group having 1 to 20 carbon atoms, and R and R' may be bound together to form a cyclic structure] or an internal alkenyl group [R'-C(R)=C(R)-R' in which R is a hydrogen atom or an organic group having 1 to 20 carbon atoms and R' is an organic group having 1 to 20 carbon atoms; the two Rs or two R's may be the same or different, and one of the two Rs and one of the two R's may be bound together to form a cyclic structure] but preferably is a terminal alkenyl group. R is a hydrogen atom or an organic group having 1 to 20 carbon atoms, and the organic group having to 20 carbon atoms is preferably an alkyl group having 1 to 20 carbon atoms, an aryl group having 6 to 20 carbon atoms or an aralkyl group having 7 to 20 carbon atoms. Among these, a hydrogen atom or a methyl group is preferred as R.

Among the alkenyl groups in the diene compound, at least two alkenyl groups may be conjugated with each other.

As specific examples of the diene compound, there may be mentioned isoprene, piperylene, butadiene, myrcene, 1,5-hexadiene, 1,7-octadiene, 1,9-decadiene and 4-vinyl-1-cyclohexene, among others, and 1,5-hexadiene, 1,7-octadiene and 1,9-decadiene are preferred.

While it is also possible to carry out the living radical polymerization of a vinyl monomer, isolating the polymer produced from the polymerization system and subjecting the polymer isolated and a diene compound to radical reaction to give the desired alkenyl group-terminated vinyl polymer, the method which comprises adding the diene compound to the polymerization system in the final stage of polymerization reaction or after completion of the reaction of the vinyl monomer employed is more preferred since it is simple and easy to carry out.

It is necessary to adjust the addition amount of the diene compound according to the radical reactivity of each alkenyl group in the diene compound. When there is a great difference in reactivity between the two alkenyl groups, the amount of the diene compound may be equivalent or slightly excessive relative to the growing polymer chain termini but, when the two alkenyl groups are identical or show little difference in reactivity, both of the alkenyl groups react with the polymer chain termini, causing coupling of the polymer chains. Therefore, the addition amount of the diene compound is preferably in excess of the growing polymer termini, preferably at least 1.5 times, more preferably at least 3 times, particularly preferably at least 5 times.

### Method of conversion from hydroxyl group to alkenyl group

The vinyl polymer having at least one alkenyl group within the molecule, which is to be used in the practice of the invention, can also be obtained from a vinyl polymer containing at least one hydroxyl group within the molecule using the methods described below as nonrestrictive examples.

Thus, mention may be made of:
(A-g) Method comprising reacting the hydroxyl group of the vinyl polymer containing at least one hydroxyl group with such a base as sodium methoxide, followed by reacting with an alkenyl group-containing halide such as allyl chloride;
(A-h) Method comprising reacting said hydroxyl group with an alkenyl group-containing isocyanate compound such as allyl isocyanate;
(A-i) Method comprising reacting said hydroxyl group with an alkenyl group-containing acid halide, such as (meth) acryloyl chloride, in the presence of a base such as pyridine; and
(A-j) Method comprising reacting said hydroxyl group with an alkenyl group-containing carboxylic acid, such as acrylic acid, in the presence of an acid catalyst.

There may also be mentioned
(A-k) Method comprising a hydroxyl group-containing vinyl polymer with a diisocyanate compound and, then, reacting the remaining isocyanate group with a compound having both an alkenyl group and a hydroxyl group.

The compound having both an alkenyl group and a hydroxyl group is not particularly restricted but may be, for example, an alkenyl alcohol such as 10-undecenol, 7-octenol, 5-hexenol or allyl alcohol.

The diisocyanate compound is not particularly restricted but may be any of those known in the art, for example such isocyanate compounds as toluylene diisocyanate, 4,4'-diphenylmethanediisocyanate, hexamethyl diisocyanate, xylylene diisocyanate, metaxylylene diisocyanate, 1,5-naphthalenediisocyanate, hydrogenated diphenylmethanediisocyanate, hydrogenated toluylene diisocyanate, hydrogenated xylylene diisocyanate and isophoronediisocyanate. These may be used singly or two or more of them may be used in combination. These may also be used in the form of blocked isocyanates.

For better weather resistance characteristics, aromatic ring-free diisocyanate compounds such as hexamethylene diisocyanate and hydrogenated diphenylmethanediisocyanate are preferably used.

### Method of synthesizing hydroxyl group-containing vinyl polymer

The method of producing the vinyl polymer having at least one hydroxyl group within the molecule, which polymer is to be used in the methods (A-g) to (A-k), includes, but is not limited to, the following.

(B-a) Method comprising subjecting to reaction, as a second monomer, a compound having both a polymerizable alkenyl group and a hydroxyl group within the molecule, for example one represented by the general formula 11 given below, in synthesizing the vinyl polymer by radical polymerization:

H₂C=C(R¹⁴)-R¹⁵-R¹⁶-OH (11)

(wherein R¹⁴, R¹⁵ and R¹⁶ are as defined above).

The time for subjecting to reaction the compound having both a polymerizable alkenyl group and a hydroxyl group within the molecule is not critical but, when the cured product to be obtained is expected to have rubber-like properties, the compound is preferably subj ected to reaction as a second monomer in the final stage of polymerization reaction or after completion of the reaction of the employed monomers in living radical polymerization.

(B-b) Method comprising subjecting an alkenyl alcohol, such as 10-undecenol, 7-octenol, 5-hexenol or allyl alcohol, to reaction in the final stage of polymerization reaction or after completion of the reaction of the employed monomer in synthesizing the vinyl polymer by living radical polymerization.

(B-c) Method comprising subjecting a vinyl monomer to radical polymerization using a hydroxyl-containing chain transfer agent, such as a hydroxyl-containing polysulfide, in large amounts, as described in Japanese Kokai Publication Hei-05-262808, for instance.

(B-d) Method comprising subjecting a vinyl monomer to radical polymerization using hydrogen peroxide or a hydroxyl-containing initiator, as described in Japanese Kokai Publication Hei-06-239912 and Japanese Kokai Publication Hei-08-283310, for instance.

(B-e) Method comprising subjecting a vinyl monomer to radical polymerization using an alcohol in excess, as described in Japanese Kokai Publication Hei-06-116312, for instance.

(B-f) Method comprising introducing a terminal hydroxyl group by hydrolyzing the halogen atom of a vinyl polymer having at least one highly reactive carbon-halogen bond or reacting such halogen atom with a hydroxyl-containing compound, according to the method described in Japanese Kokai Publication Hei-04-132706, for instance.

(B-g) Method comprising reacting a vinyl polymer having at least one highly reactive carbon-halogen bond with a hydroxyl-containing stabilized carbanion, such as one represented by the general formula 12 for substitution of the halogen atom:

M⁺C⁻(R¹⁸)(R¹⁹)-R²⁰-OH (12)

(wherein R¹⁸, R¹⁹ and R²⁰ are as defined above).

As the electron-withdrawing group R¹⁸ and/or R¹⁹ in the general formula 12, there may be mentioned, for example, -CO₂R (ester group), -C(O)R (keto group), -CON(R₂) (amido group), -COSR (thioester group), -CN (nitryl group), and -NO₂ (nitro group), and particularly preferred are -CO₂R, -C(O)R and -CN. In these formulae, the substituent R is an alkyl group having 1 to 20 carbon atoms, an aryl group having 6 to 20 carbon atoms, or an aralkyl group having 7 to 20 carbons atoms, and preferably an alkyl group having 1 to 10 carbon atoms or a phenyl group.

(B-h) Method comprising reacting a vinyl polymer having at least one highly reactive carbon-halogen bond with a simple substance metal, such as zinc, or an organometallic compound and then reacting the thus-prepared enolate anion with an aldehyde or ketone.

(B-i) Method comprising reacting a vinyl polymer having at least one highly reactive carbon-halogen bond with a hydroxyl-containing oxy anion or carboxylate anion, such as one represented by the general formula 13 or 14 given below, for substitution of the halogen atom:

HO-R²¹-O⁻M⁺ (13)

(wherein R²¹ and M⁺ are as defined above);

HO-R²²-C(O)O⁻M⁺ (14)

(wherein R²² and M⁺ are as defined above).

As for M*, conditions of reaction, solvents, and the like, each of above-mentioned ones described as for (A-f) may be preferably used.

(B-j) Method comprising subj ecting, as a second monomer, a compound having a low polymerizability alkenyl group and a hydroxyl group within the molecule to reaction in the final stage of the polymerization reaction or after completion of the reaction of the employed monomer in synthesizing the vinyl polymer by living radical polymerization.

Such compound having a low polymerizability alkenyl group and a hydroxyl group within the molecule is not particularly restricted but may be a compound represented by the general formula 15, for instance:

H₂C=C(R¹⁴)-(R²¹)-OH (15)

(wherein R¹⁴ and R²¹ are as defined above).

The compound represented by the above general formula 15 is not particularly restricted but, in view of ready availability, alkenyl alcohols such as 10-undecenol, 7-octenol, 5-hexenol and allyl alcohol are preferred.

When no halogen is directly involved in the method of hydroxyl group introduction, as in (B-a) to (B-e) and (B-j), in the practice of the invention, living radical polymerization is preferred as the method of vinyl polymer synthesis, and atom transfer radical polymerization is more preferred.

In the method according to which a vinyl polymer having at least one highly reactive carbon-halogen bond, as mentioned above under (B-f) to (B-i), is utilize d, the vinyl polymer having at least one highly reactive carbon-halogen bond is preferably synthesized by chain transfer polymerization using a halide as a chain transfer agent or by atom transfer radical polymerization using an organic halide or sulfonyl halide compound as an initiator, more preferably by atom transfer radical polymerization.

Among the synthetic methods (B-a) to (B-j), the methods (B-b) and (B-i) are preferred from the easy controllability viewpoint.

Among the various production methods for the (A) component as described above, the (A) component is preferably obtained by the following methods, among others.

One of them is the method comprising:
(1) Polymerizing a vinyl monomer by atom transfer radical polymerization to produce a vinyl polymer having a terminal structure represented by the following general formula 1:

   -C(R¹)(R²) (X) (1)

   (wherein R¹ and R² represent the groups bound to the ethylenically unsaturated group in the vinyl monomer and X represents chlorine, bromine or iodine) and
(2) Converting the terminal halogen of the above polymer to a substituent having an alkenyl group capable of being hydrosilylated.

Another method is the one comprising:
(1) Producing a vinyl polymer by polymerizing a vinyl monomer by living radical polymerization and then
(2) Reacting that polymer with a compound having at least two low-polymerizability alkenyl groups.

### <<Hydrosilyl group-containing compound (II)>>

The (B) component hydrosilyl group-containing compound (II) is not particularly restricted but may be any of those hydrosilyl group-containing compounds which can cure the (A) component, namely the vinyl polymer having at least one alkenyl group within the molecule, by crosslinking. Thus, various species can be used. For example, use may be made of such compounds as linear polysiloxanes represented by the general formula 16 or 17:

R²³₃SiO-[Si(R²³)₂O]ₐ-[Si(H)(R²⁴)O]_{b}-[Si(R²⁴)(R²⁵)O]_{c}-SiR²³₃ (16)

HR²³₂SiO-[Si(R²³)₂O]ₐ-[Si(H)(R²⁴)O]_{b}-[Si(R²⁴)(R²⁵)O]_{c}-SiR²³₂H (17)

(wherein R²³ and R²⁴ each represents an alkyl group having 1 to 6 carbon atoms or a phenyl group and R²⁵ represents an alkyl group, an aryl group or an aralkyl group having 1 to 10 carbon atoms; the plurality of R²³, R²⁴ and/or R²⁵ may be the same or different; and a, b and c each represents an integer satisfying the relation 0 ≤ a ≤ 100, 2 ≤ b ≤ 100 or 0 ≤ c ≤ 100, respectively), and
cyclic siloxanes represented by the general formula 18: 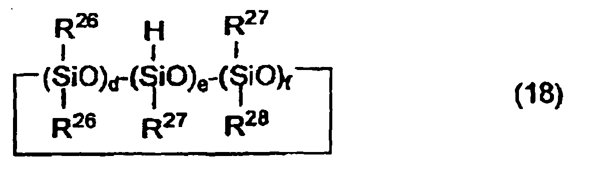 (wherein R²⁶ and R²⁷ each represents an alkyl group having 1 to 6 carbon atoms or a phenyl group and R²⁸ represents an alkyl group, an aryl group or an aralkyl group having 1 to 10 carbon atoms; the plurality of R²⁶, R²⁷ and/or R²⁸ may be the same or different; and d, e and f each represents an integer satisfying the relations 0 ≤ d ≤ 8, 2 ≤ e ≤ 10 or 0 ≤ f ≤ 8, respectively, and 3 ≤ d + e + f ≤ 10).

These may be used singly or in the form of a mixture of two or more of them. Among those siloxanes, phenyl group-containing linear siloxanes represented by the general formula 19 or 20 given below and cyclic siloxanes represented by the general formula 21 or 22 given below are preferred from the viewpoint of compatibility with the vinyl polymer.

(CH₃)₃SiO-[Si(H)(CH₃)O]_{g}-[Si(C₆H₅)₂O]ₕ-Si(CH₃)₃ (19)

(CH₃)₃SiO-[Si(H)(CH₃)O]_{g}-[Si(CH₃){CH₂C(H)(R³⁰)C₆H₅}O]ₕ-Si(CH₃)₃ (20)

(wherein R³⁰ represents a hydrogen atom or a methyl group, g and h each is an integer satisfying the relation 2 ≤ g ≤ 100 or 0 ≤ h ≤ 100, respectively; and C₆H₅ represents a phenyl group.) 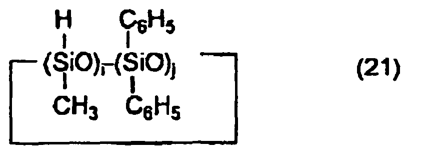 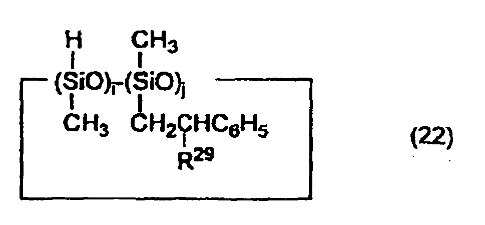 (wherein R²⁹ represents a hydrogen atom or a methyl group, i and j each is an integer satisfying the relations 2 ≤ i ≤ 10 or 0 ≤ j ≤ 8, respectively, and 3 ≤ i + j ≤ 10; and C₆H₅ represents a phenyl group.)

Also usable as the (B) component hydrosilyl group-containing compound (II) are compounds derived from lower-molecular-weight compounds having two or more alkenyl groups within the molecule by subjecting a hydrosilyl group-containing compound represented by any of the general formulae 16 to 22 to addition reaction thereto in a manner such that part of the hydrosilyl groups may remain after the reaction.

Various species can be used as the low-molecular-weight compound having two or more alkenyl groups within the molecule. As examples, there may be mentioned such hydrocarbon compounds as 1,4-pentadiene, 1,5-hexadiene, 1,6-heptadiene, 1,7-octadiene, 1, 8-nonadiene and 1,9-decadiene, such ether compounds as O,O'-diallylbisphenol A and 3,3'-diallylbisphenol A, such ester compounds as diallyl phthalate, diallyl isophthalate, triallyl trimellitate and tetraallyl pyromellitate, such carbonate compounds as diethylene glycol diallyl carbonate, such isocyanurate compounds as triallyl isocyanurate, and such hydrocarbon compounds as divinylbenzene, divinylbiphenyl and trivinylcyclohexane.

Such hydrosilyl group-containing compounds (II) can be obtained by slowly adding dropwise such a compound having two or more alkenyl groups within the molecule as mentioned above to an excessive amount of a hydrosilyl group-containing compound represented by any of the general formulae 16 to 22 in the presence of a hydrosilylation catalyst to be mentioned later herein. Among such compounds, the following may be mentioned as preferred examples considering the availability of raw materials, the ease of removal of the hydrosilyl group-containing compound used in excess and, further, the compatibility with the vinyl polymer (I). 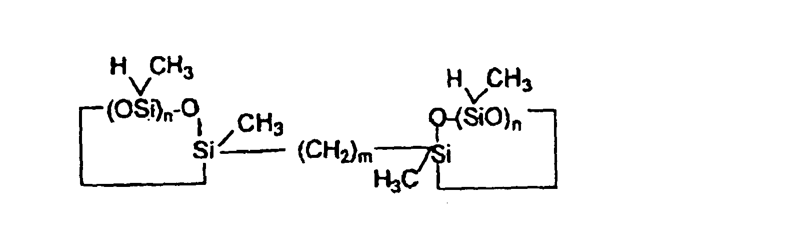 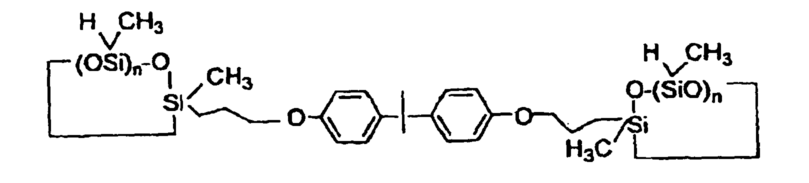 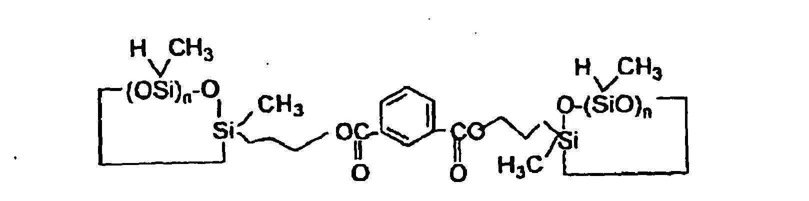 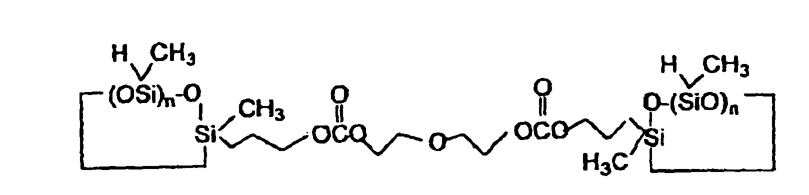 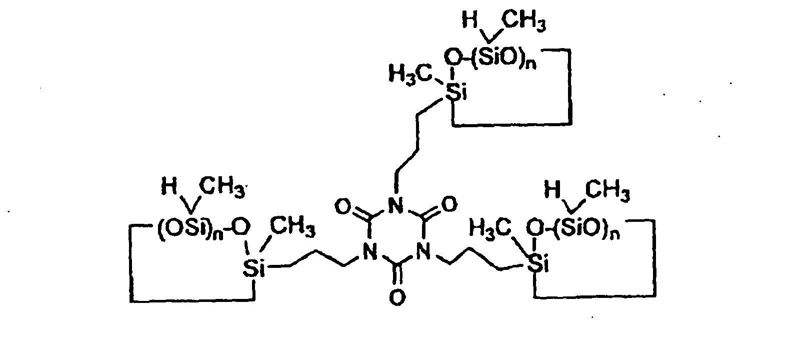 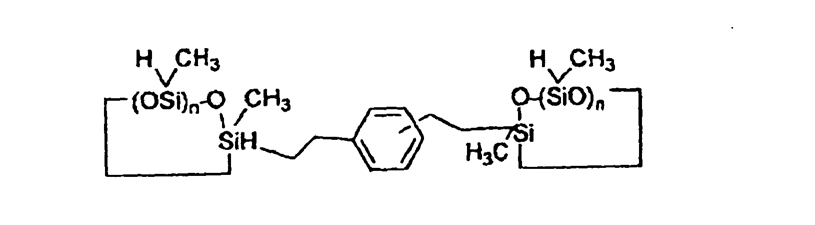 (wherein n is an integer of 2 to 4 and m is an integer of 5 to 10.)

The addition amount of the (B) component is not particularly restricted but, from the curability viewpoint, the mole ratio ((B)/(A)) between the alkenyl group in the (A) component and the SiH (hydrosilyl) group in the (B) component is preferably within the range of 5 to 0.2, particularly preferably 2.5 to 0.4.

### «(C) Hydrosilylation catalyst»

The (C) component hydrosilylation catalyst to be used in the practice of the invention is not particularly restricted but any arbitrary one can be used. As specific examples, there may be mentioned chloroplatinic acid; simple substance platinum; solid platinum deposited on such a support as alumina, silica or carbon black; platinum-vinylsiloxane complexes {e.g. Ptₙ(ViMe₂SiOSiMe₂Vi)n, Pt[(MeViSiO)₄]ₘ}; platinum-phosphine complexes {e.g. Pt(PPh₃)₄, Pt(PBu₃)₄}; platinum-phosphite complex {e.g. Pt[P(OPh)₃]₄, Pt[P(OBu)₃]₄} (in the formulae, Me represents a methyl group, Bu a butyl group, Vi a vinyl group and Ph a phenyl group and n and m each represents an integer) ; chloroplatinic acid complexes with alcohols, aldehydes, ketones, etc.; platinum-olefin complexes (e.g. pt(CH₂=CH₂)₂(PPh₃)₂, Pt(CH₂=CH₂)₂Cl₂; Pt(acac)₂ (wherein acac represents acetylacetonato); dicarbonyldichloroplatinum; Karstedt catalyst; platinum-hydrocarbon complexes described in Ashby et al.' s U.S. Patents Nos. 3,159,601 and 3,159,662; and platinum alcoholate catalysts described in Lamoreaux' s U. S. Patent No. 3,220,972, among others. Platinum chloride-olefin complexes described in Modic's U.S. Patent No. 3,516,946 are also useful in the practice of the invention. As examples of the catalyst other than platinum compounds, there may be mentioned RhCl(PPh₃)₃, RhCl₃, Rh/Al₂O₃, RuCl₃, IrCl₃, FeCl₃, AlCl₃, PdCl₂·2H₂O, NiCl₂ and TiCl₄, among others.

These catalysts may be used singly or two or more of them may be used in combination. From the catalytic activity viewpoint, chloroplatinic acid, platinum-olefin complexes, platinum-vinylsiloxane complexes and Pt(acac)₂, among others, are preferred.

The addition amount of the catalyst is not particularly restricted but is preferably within the range of 10⁻¹ to 10⁻⁸ moles, more preferably within the range of 10⁻² to 10⁻⁶ moles, per mole of the alkenyl group in the (A) component. The hydrosilylation catalysts are generally expensive and corrosive and, in some cases, generate hydrogen gas in large amounts to thereby cause foaming of cured products, so that the use thereof at levels exceeding 10⁻¹ moles is not recommended.

### <<(D) Phenolic antioxidant>>

The (D) component phenolic antioxidant to be used in the practice of the invention is not particularly restricted but any arbitrary one can be used. From the thermal aging resistance viewpoint, however, those phenolic antioxidants which have a hindered phenol structure or a semi-hindered phenol structure within the molecule are preferred. As specific examples of such compounds, there may be mentioned 2,6-di-tert-butyl-4-methylphenol, 2,6-di-tert-butyl-4-ethylphenol, mono- or di- or tri-(α-methylbenzyl)phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, tris[N-(3,5-di-tert-butyl-4-hydroxybenzyl)]isocyanurate, 1,1,3-tris(2-methyl-4-hydroxy-5-tert-butylphenyl)butane, butylidene-1,1 bis[3-(3-tert-butyl-4-hydroxy-5-methylphenyl)propionate], octadecyl 3-(3,5-di-tert-butyl-4-hydroxyphenyl)propionate, tetrakis[methylene-3-(3,5-di-tert-butyl-4-hydroxyphenyl) propionato]methane, triethylene glycol bis[3-(3-tert-butyl-4-hydroxy-5-methylphenyl)propionate], 3,9-bis{2-[3-(3-tert-butyl-4-hydroxy-5-methylphenyl) prooionyloxy]-1,1-dimethylethyl}-2,4,8,10-tetraoxaspiro [5.5]undecane, 1,3,5-trimethyl-2,4,6-tris(3,5-di-tert-butyl-4 -hydroxybenzyl) benzene, 2,2-thiodiethylenebis[3-(3,5-di-tert-butyl-4-hydroxyphenyl) propionate], N,N'-hexamethylenebis(3,5-di-tert-butyl-4 -hydroxyhydrocinnamide), 3,5-bis(1,1-dimethylethyl)-4-hydroxybenzenepropanoic acid C7-C9 mixed side-chained alkyl ester, 1,6-hexanediol bis[3-(3,5-di-tert-butyl-4-hydroxyphenyl)propionate], 1,3,5-tris[(4-tert-butyl-3-hydroxy-2,6-xylyl)methyl]-1,3,5 -triazine-2,4,6-trione, 2,4-bis(n-octylthio)-6-(4-hydroxy-3,5-di-tert-butylanilino) -1,3,5-triazine, 2-tert-butyl-6-(3'-tert-butyl-5'-methyl-2'-hydroxybenzyl) -4-methylphenyl acrylate, 2-[1-(2-hydroxy-3,5-di-tert-pentylphenyl)ethyl]-4,6-di -tert-pentylphenyl acrylate, 4,6-bis[(octylthio)methyl]-o-cresol, 2,4-di-tert-butylphenyl-3,5-di-tert-butyl-4-hydroxybenzoate and 1,6-hexanediolbis[3-(3,5-di-tert-butyl-4-hydroxyphenyl) propicnate], among others.

Relevant product names include, but are not limited to, Nocrac 200, Nocrac M-17, Nocrac SP, Nocrac SP-N, Nocrac NS-5, Nocrac NS-6, Nocrac NS-30, Nocrac 300, Nocrac NS-7 and Nocrac DAH (all being products of Ouchi Shinko Chemical Industrial Co., Ltd.); Adekastab AO-20, Adekastab AO-30, Adekastab AO-40, Adekastab AO-50, Adekastab AO-60, Adekastab AO-70, Adekastab AO-80 and Adekastab AO-330 (all being products of Asahi Denka Co., Ltd.); Irganox 1010, Irganox 1035, Irganox 1076, Irganox 1098, Irganox 1135, Irganox 1330, Irganox 1520L, Irganox 245, Irganox 259, Irganox 3114, Irganox 3790 and Irganox 565 (all being products of Ciba Specialty Chemicals); Sumilizer BHT, Sumilizer S, Sumilizer BP-76, Sumilizer MDP-S, Sumilizer GM, Sumilizer GS, Sumilizer BBM-S, Sumilizer WX-R, Sumilizer BP101 and Sumilizer GA-80 (all being products of Sumitomo Chemical Co., Ltd.); among others.

These phenolic antioxidants may be used singly or two or more of them may be used in combination. More preferred from the increased thermal aging resistance viewpoint are those phenolic antioxidants which have a molecular weight of not lower than 600, namely
tetrakis[methylene-3-(3,5-di-tert-butyl-4-hydroxyphenyl) propionato]methane,
tris[N-(3,5-di-tert-butyl-4-hydroxybenzyl)]isocyanurate, 1,3,5-trimethyl-2,4,6-tris (3,5-di-tert-butyl-4-hydroxybenzyl) benzene, and
3,9-bis{2-[3-(3-tert-butyl-4-hydroxy-5-methylphenyl) propionyloxy]-1,1-dimethylethyl}-2,4,8,10-tetraoxaspiro [5.5]undecane.

The addition amount of the phenolic antioxidant is not particularly restricted but the phenolic antioxidant is preferably used in an amount of 0.1 to 10 parts by weight, more preferably 0.5 to 5 parts by weight, per 100 parts by weight of the (A) component. At addition amounts lower than 0.1 part by weight, the thermal aging resistance improving effect may be sometimes insufficient and, at levels exceeding 10 parts by weight, the cured products obtained from the curable composition may sometimes show marked discoloration.

### <<(E) Sulfur-containing antioxidant>>

The (E) component sulfur-containing antioxidant to be used in the practice of the invention is not particularly restricted but may be any arbitrary one. Since the thiol structure affects the curability, those compounds which have a thioether structure within the molecule are preferred. As specific examples of such compounds, there may be mentioned 4,4'-thiobis(3-methyl-6-tert-butylphenol), dilauryl thiodipropionate, bis{2-methyl-4-[3-n-alkyl(C₁₂ or C₁₄)thiopropionyloxy]-5-tert-butylphenyl}sulfide, pentaerythrityl tetrakis(3-laurylthiopropionate), ditridecyl 3,3'-thiodipropionate, distearyl thiodipropionate, 2,2-thiodiethylenebis[3-(3,5-di-tert-butyl-4-hydroxyphenyl) propionate], 4,6-bis[(octylthio)methyl]-o-cresol, 2,4-bis(n-octylthio)-6-(4-hydroxy-3,5-di-tert-butylanilino) -1,3,5-triazine, dimyristyl 3,3' -thiodipropionate and dibutyl methylenebisthioglycolate, among others.

Relevant product names include, but are not limited to, Nocrac 300 and Nocrac 400 (both being products of Ouchi Shinko Chemical Industrial Co., Ltd.); Adekastab AO-23, AO-4125 and AO-503A (all being products of Asahi Denka Co., Ltd.); Irganox PS800FL, Irganox PS802FL, Irganox 1035, Irganox 1520L and Irganox 565 (all being products of Ciba Specialty Chemicals) ; Sumilizer TPL-R, Sumilizer TPS, Sumilizer TPM, Sumilizer WX-R and Sumilizer TP-D (all being products of Sumitomo Chemical Co., Ltd.); and Vulkanol 88 (product of Bayer), among others.

These sulfur-containing antioxidants may be used singly or two or more of them may be used in combination. More preferred from the increased thermal aging resistance viewpoint is that sulfur-containing antioxidant which has a molecular weight of not lower than 1,000, namely pentaerythrityl tetrakis(3-laurylthiopropionate).

The addition amount of the sulfur-containing antioxidant is not particularly restricted but the sulfur-containing antioxidant is preferably used in an amount of 0.1 to 10 parts by weight, more preferably 0.5 to 5 parts by weight, per 100 parts by weight of the (A) component. At addition amounts lower than 0.1 part by weight, the thermal aging resistance improving effect may be sometimes insufficient and, at levels exceeding 10 parts by weight, the curability may be affected in certain instances.

The addition amount ratio between the (D) component phenolic antioxidant and the (E) component sulfur-containing antioxidant is not particularly restricted but, from the increased thermal aging resistance viewpoint, the phenolic antioxidant/sulfur-containing antioxidant ratio is preferably within the range of 0.1 to 10, particularly preferably 0.3 to 3.

Preferred combinations of the (D) component phenolic antioxidant and the (E) component sulfur-containing antioxidant are the combination of tetrakis[methylene-3-(3,5-di-tert-butyl-4-hydroxyphenyl) propionato]methane and pentaerythrityl tetrakis(3-laurylthiopropionate), the combination of tris[N-(3,5-di-tert-butyl-4-hydroxybenzyl)]isocyanurate and pentaerythrityl tetrakis (3-laurylthiopropionate), and the combination of 3,9-bis{2-[3-(3-tert-butyl-4-hydroxy-5-methylphenyl) propionyloxy]-1,1-dimethylethyl}-2,4,8,10-tetraoxaspiro [5.5]undecane and pentaerythrityl tetrakis(3-laurylthiopropionate). These combinations are particularly excellent in that rubber elasticity can be retained for a long period of time in a thermal aging test at 175°C and, even after the heat resistance test, discoloration never occurs or occurs only to a slight extent.

### << (F) Reinforcing silica>>

The curable composition of the invention may further contain the (F) component reinforcing silica as occasion demands.

As the (F) component reinforcing silica, there may be mentioned fumed silica and precipitated silica species and the like. Among them, those species which have a particle diameter of not greater than 50 µm and a specific surface area of not smaller than 80 m²/g are preferred from the reinforcing effect viewpoint. Surface treated silica species, for example those species surface-treated with an organosilane, organosilazane or diorganocyclopolysiloxane, are more preferred since a level of flowability suited for molding can readily be attained with them. More specific examples of the reinforcing silica include, but are not limited to, Nippon Aerosil Co., Ltd.'s Aerosil, which is a fumed silica species, and Nippon Silica Industrial's Nipsil, which is a precipitated silica species, among others.

The specific surface area referred to above is the value measured by the BET method (based on physical adsorption of an inert gas at low temperature and low humidity conditions).

The addition amount of the reinforcing silica is not particularly restricted but the reinforcing silica is preferably used in an amount of 0.1 to 100 parts by weight, preferably 0.5 to 80 parts by weight, particularly 1 to 50 parts by weight, per 100 parts by weight of the (A) component. At addition amounts lower than 0.1 part by weight, an insufficiently improved reinforcing effect may result and, at levels exceeding 100 parts by weight, the resulting curable composition may be deteriorated in workability. The reinforcing silica species (F) may be used singly or two or more of them may be used in combination.

### <<Curable composition>>

In the curable composition of the invention, there may be incorporated one or more of various additives for physical properties adjustment, for example curing modifiers, flame retardants, light stabilizers, ultraviolet absorbers, fillers, plasticizers, physical property modifiers, adhesion promoters, storage stability improvers, solvents, radical scavengers, metal deactivators, antiozonants, phosphorus-containing peroxide decomposers, lubricants, pigments, blowing agents, and photocurable resins, each in an appropriate amount. These various additives may be used singly or two or more species may be used in combination.

### <Curing modifier>

The curable composition of the invention may further contain a curing modifier according to need.

As the curing modifier, there may be mentioned aliphatic unsaturated bond-containing compounds, among others. Examples are acetylene alcohols represented by the formula: 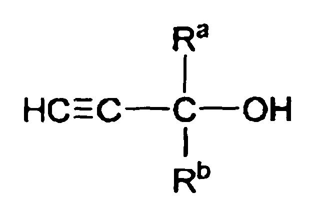 (wherein R^{a} and R^{b} may be the same or different and each represents a hydrogen atom, an alkyl group having 1 to 10 carbon atoms or an aryl group having 6 to 10 carbon atoms and they may be bound to each other.) In the case of these acetylene alcohols, in particular, the bulkiness of R^{a} or R^{b} is greatly concerned in the storage stability and those in which R^{a} or R^{b} is bulky are preferred in view of good storage stability at elevated temperatures. Excessive bulkiness, however, disadvantageously results in decreased curability in spite of good storage stability. Thus, it is important to select an acetylene alcohol balanced between storage stability and curability.

As examples of the acetylene alcohol which are balanced between storage stability and curability, there may be mentioned 2-phenyl-3-butyn-2-ol, 1-ethynyl-1-cyclohexanol, 3,5-dimethyl-1-hexyn-3-ol, 3-methyl-1-hexyn-3-ol, 3-ethyl-1-pentyn-3-ol, 2-methyl-3-butyn-2-ol and 3-methyl-1-pentyn-3-ol, among others. Among them, 1-ethynyl-1-cyclohexanol and 3,5-dimethyl-1-hexyn-3-ol are more preferred from the availability viewpoint.

As examples of other aliphatic unsaturated bond-containing compounds capable of improving the storage stability at elevated temperatures than acetylene alcohols, there may be mentioned:
en-yne compounds represented by the formula: 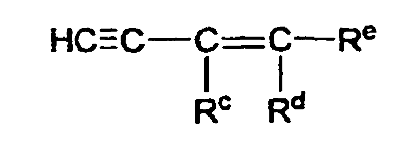 (wherein R^{c}, R^{d} and R^{e} may be the same or different and each is a hydrogen atom or a hydrocarbon group having 1 to 6 carbon atoms, provided that the total number of carbon atoms in R^{c}, R^{d} and R^{e} is 2 to 6; when R^{c} and R^{d} or R^{d} and R^{e} are hydrocarbon groups, they may be connected to each other),
silane compounds represented by the formula : 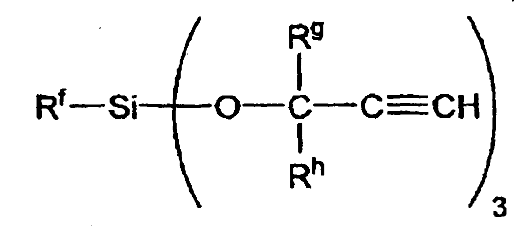 (wherein R^{f}, R^{g} and R^{h} may be the same or different and each is a hydrocarbon group having 1 to 10 carbon atoms and R^{g} and R^{h} may be connected to each other),
polysiloxane compounds represented by the formula: 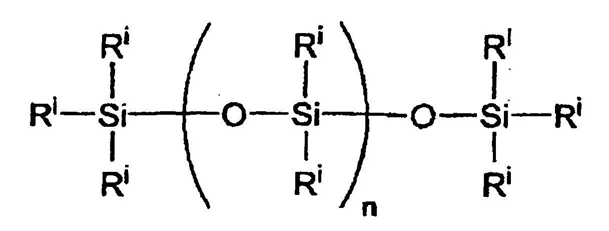 (wherein Rⁱs may be the same or different and each represents a hydrocarbon group having 1 to 10 carbon atoms provided that at least one of them contains an acetylenically unsaturated bond; and n represents an integer of 1 to 10),
olefinic compounds represented by the formula: 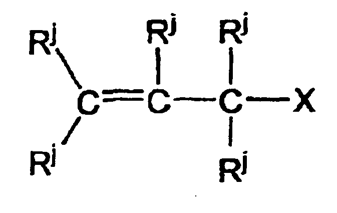 (wherein R^{j}s may be the same or different and each represents a hydrogen atom, a halogen atom or a hydrocarbon group having 1 to 10 carbon atoms and X is a halogen atom such as chlorine or bromine, or an alkoxy group),
olefinic alcohol aliphatic carboxylic acid esters such as vinyl acetate, cyclic tetravinylsiloxanes, aliphatic unsaturated bond-containing nitriles such as 2-pentenenitrile, alkyl
acetylenedicarboxylates, maleic acid esters such as diallyl maleate, dimethyl maleate and diethyl maleate, and diorgano fumarates, among others.

The addition amount of the curing modifier can be selected substantially arbitrarily so long as it can be uniformly dispersed in the (A) component and (B) component. Preferably, however, the curing modifier is used in an amount within the range of 2 to 10,000 mole equivalents relative to the (C) component hydrosilylation catalyst. The curing modifier may comprise one single species or a combination of two or more species.

### <Metal soap>

If necessary, the curable composition of the invention may contain a metal soap to improve the mold release characteristics.

The metal soap is not particularly restricted but any arbitrary one can be used. The metal soap is generally a long-chain fatty acid bound with a metal ion, and any metal salt that has both a nonpolar or low-polarity segment derived from a fatty acid and a polar moiety, namely the moiety binding to a metal, within each molecule can be used.

As the long-chain fatty acid, there may be mentioned, for example, saturated fatty acids having 1 to 18 carbon atoms, unsaturated fatty acids having 3 to 18 carbon atoms, and aliphatic dicarboxylic acids. Among these, saturated fatty acids having 1 to 18 carbon atoms are preferred from the availability viewpoint, and saturated fatty acids having 6 to 18 carbon atoms are particularly preferred from the mold release characteristics viewpoint.

As the metal ion, there may be mentioned alkali metal (lithium, sodium, potassium), alkaline earth metal (magnesium, calcium, barium), zinc, lead, cobalt, aluminum, manganese and strontium ions, among others.

As examples of the metal soap, there may more specifically be mentioned lithium stearate, lithium 12-hydroxystearate, lithium laurate, lithium oleate, lithium 2-ethylhexanoate, sodium stearate, sodium 12-hydroxystearate, sodium laurate, sodium oleate, sodium 2-ethylhexanoate, potassium stearate, potassium 12-hydroxystearate, potassium laurate, potassium oleate, potassium 2-ethylhexanoate, magnesium stearate, magnesium 12-hydroxystearate, magnesium laurate, magnesium oleate, magnesium 2-ethylhexanoate, calcium stearate, calcium 12-hydroxystearate, calcium laurate, calcium oleate, calcium 2-ethylhexanoate, barium stearate, barium 12-hydroxystearate, barium laurate, barium ricinoleate, zinc stearate, zinc 12-hydroxystearate, zinc laurate, zinc oleate, zinc 2-ethylhexanoate, lead stearate, lead 12-hydroxystearate, cobalt stearate, aluminum stearate and manganese oleate, among others.

Among those metal soaps, stearic acid metal salts are preferred from the availability and safety viewpoint, and one or more species selected from the group consisting of calcium stearate, magnesium stearate and zinc stearate are most preferred from the economy viewpoint, in particular.

The addition amount of the metal soap is not particularly restricted but it is generally preferably that the metal soap be used in an amount within the range of 0.025 to 5 parts by weight, more preferably 0.05 to 4 parts by weight, per 100 parts by weight of the (A) component. At addition amounts exceeding 5 parts by weight, the cured products tend to show deteriorated physical properties and, at levels lower than 0.025 part by weight, there is a tendency toward failure to attain the desired mold release characteristics.

### <Filler>

In addition to the (F) component reinforcing silica, one or more of various fillers may be used in the curable composition of the invention according to need.

The fillers are not particularly limited and may include reinforcing fillers such as wood flour, pulp, cotton chips, asbestos, mica, walnut shell flour, rice hull flour, graphite, china clay, silica (e.g. crystalline silica, fused silica, dolomite, silicic anhydride, and hydrous silicic acid), and carbon black; fillers such as ground calcium carbonate, colloidal calcium carbonate, magnesium carbonate, diatomaceous earth, china clay, calcined clay, clay, talc, titanium oxide, bentonite, organic bentonite, ferric oxide, red iron oxide, aluminum fine powder, flint powder, zinc oxide, activated zinc white, zinc powder, zinc carbonate, and shirasu balloon; fibrous fillers such as asbestos, glass fibers, glass filaments, carbon fibers, Kevlar fibers and polyethylene fibers; and the like.

Preferable fillers among them are crystalline silica, fused silica, dolomite, carbon black, calcium carbonate, titanium oxide, talc and the like.

In particular, in the case where it is aimed to obtain the cured product with high strength by adding the fillers, the filler to be added may be selected from mainly fumed silica, silicic anhydride, hydrous silicic acid, carbon black, surface treated fine calcium carbonate, calcined clay, clay and activated zinc white. Above all, ultrafine powder silica with a specific surface area of 50 m²/g or higher, generally 50 to 400 m²/g and preferably about 100 to 300 m²/g (measured by BET absorption method) is preferable. Further, silica previously surface-treated for hydrophobic treatment with an organosilicon compound such as an organosilane, an organosilazane, and a diorganopolysiloxane is more preferable.

In particular when low-strength, high-elongation cured products are to be obtained, one or more fillers selected mainly from among titanium oxide, calcium carbonate, talc, ferric oxide, zinc oxide, shirasu balloons and the like may be added. Generally, calcium carbonate, when small in specific surface area, may be insufficiently effective at improving the strength at break and elongation at break of cured products. As the specific surface area value increases, the effects of improving the strength at break and elongation at break of cured products become better.

Furthermore, calcium carbonate is more preferably surface-treated with a surface treating agent. When surface-treated calcium carbonate is used, it is expected that the workability of the composition of the invention be improved and the effects of improving the storage stability of the curable composition be more improved as compared with the use of non-surface-treated calcium carbonate.

Useful as the surface treating agent are organic substances such as fatty acids, fatty acid soaps and fatty acid esters, various surfactants, and various coupling agents such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid; sodium, potassium and other salts of such fatty acids; alkyl esters of such fatty acids; and the like. As specific examples of the surfactants, there may be mentioned sulfate ester type anionic surfactants such as polyoxyethylene alkyl ether sulfate esters and long-chain alcohol sulfate esters, and sodium, potassium and other salts thereof; sulfonic acid type anionic surfactants such as alkylbenzenesulfonic acids, alkylnaphthalenesulfonic acids, paraffinsulfonic acids, α-olefinsulfonic acids and alkylsulfosuccinic acid, and sodium, potassium and other salts thereof, and the like.

In the surface treatment, the surface treating agent is used in an amount preferably within the range of 0.1 to 20% by weight, more preferably within the range of 1 to 5% by weight, relative to calcium carbonate. When the amount for treatment is smaller than 0.1% by weight, the effects of improving the workability may be insufficient and, when it exceeds 20% by weight, the storage stability of the curable composition may decrease.

When calcium carbonate is used in expectation of producing the effects of improving the thixotropic properties of the formulations and the strength at break, elongation at break and the like of the cured product, in particular, colloidal calcium carbonate is preferably used, although this does not mean any particular restriction.

On the other hand, ground calcium carbonate is sometimes added for the purpose of reducing the viscosity of the formulations, increasing the weight thereof and reducing the cost, for example. When ground calcium carbonate is used, such species as mentioned below can be used according to need.

Ground calcium carbonate is prepared from natural chalk, marble, limestone or the like by mechanical grinding/processing. The method of grinding includes the dry method and wet method. Wet ground products sometimes deteriorate the storage stability of the curable composition of the invention. Upon classification, ground calcium carbonate gives various products differing in average particle size. In cases where the effects of improving the strength at break and elongation at break of cured products are expected, the specific surface area value of the ground calcium carbonate is preferably not less than 1.5 m²/g and not more than 50 m²/g, more preferably not less than 2 m²/g and not more than 50 m²/g, still more preferably not less than 2.4 m²/g and not more than 50 m²/g, most preferably not less than 3 m²/g and not more than 50 m²/g, although this does not mean any particular restriction. When the specific surface area is smaller than 1.5 m²/g, those improving effects may be insufficient. Of course, the above does not apply to the cases where it is only intended to reduce the viscosity and/or increase the weight.

For example, the combined use, according to need, of ground calcium carbonate having a specific surface area value of not smaller than 1.5 m²/g and colloidal calcium carbonate is fully expected to suppress the viscosity increase in the formulations to a moderate level and produce the effects of improving the strength at break and elongation at break of cured products, although this does not mean any particular restriction.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a Shimadzu Corporation's model SS-100 specific surface area measuring apparatus.

Those fillers may be used singly or two or more of them may be used in combination according to the intended purpose or necessity. When a filler is used, the filler is preferably used in an amount within the range of 5 to 1, 000 parts by weight, more preferably within the range of 20 to 500 parts by weight, particularly preferably within the range of 40 to 300 parts by weight, per 100 parts by weight of the vinyl polymer (I). When the addition amount is lower than 5 parts by weight, the effects of improving the strength at break, elongation at break, adhesion and weather-resistant adhesion of cured products may be insufficient and, when the amount exceeds 1,000 parts by weight, the workability of the curable composition may deteriorate.

### <Hollow microsphere>

Furthermore, for the purpose of reducing the weight and cost without causing significant deteriorations in physical properties, hollow microspheres may be added in combination with such a reinforcing filler as mentioned above.

Such hollow microspheres (hereinafter sometimes referred to as "balloons") are not particularly restricted but include, for example, hollow spheres (inorganic balloons or organic balloons) constituted of an inorganic or organic material and having a diameter of not greater than 1 mm, preferably not greater than 500 µm, and even more preferably not greater than 200 µm, as described in "Kinosei Fira no Saishin Gijutsu (Latest Technology of Functional Fillers)" (CMC Publishing CO., LTD). In particular, hollow microspheres having a true specific gravity of not higher than 1.0 g/cm³ are preferably used and, more preferably, hollow microspheres having a true specific gravity of not higher than 0.5 g/cm³ are used.

The inorganic balloons include silicic balloons and non-silicic balloons. Examples of the silicic balloons are shirasu balloons, perlite, glass balloons, silica balloons, fly ash balloons and the like, and examples of the non-silicic balloons are alumina balloons, zirconia balloons, carbon balloons and the like.

Commercially available as specific examples of such inorganic balloons are Idichi Kasei's Winlite and Sanki Kogyo Co., Ltd.'s Sankilite (shirasu balloons), Nippon Sheet Glass Co., Ltd.'s Calloon, Sumitomo 3M Limited's Cel-Star Z-28, Emerson & Cuming Company's Micro Balloon, Pittsburgh Corning Corporation's Celamic Glassmodules and Sumitomo 3M Limited's Glass Bubbles (glass balloons), Asahi Glass Co., Ltd.' Q-Cel and Taiheiyo Cement Corporation's E-Spheres (silica balloons), Pfamarketing's Cerospheres and Fillite U.S.A.'s Fillite (fly ash balloons), Showa Denko K.K.'s BW (alumina balloons), Zircoa Inc.'s Hollow Zirconium Spheres (zirconia balloons), and Kureha Chemical Industry's Kurekasphere and General Technologies Inc.' Carbosphere (carbon balloons).

The organic balloons include thermosetting resin balloons and thermoplastic resin balloons. Examples of the thermosetting resin balloons are phenol balloons, epoxy balloons and urea balloons, and examples of the thermoplastic balloons are Saran balloons, polystyrene balloons, polymethacrylate balloons, polyvinyl alcohol balloons and styrene-acrylic type balloons. Crosslinked thermoplastic resin balloons can also be used. The balloons so referred to herein may be balloons after expansion or balloons produced by expansion following incorporation of a blowing agent-containing resin.

As specific examples of such organic balloons which are commercially available, there may be mentioned Union Carbide Corporation's Ucar and Phenolic Microballoons (phenol balloons), Emerson & Cuming Company's Eccospheres (epoxy balloons), Emerson & Cuming Company's Eccospheres VF-O (urea balloons), Dow Chemical Company's Saran Microspheres, Japan Fillite Co., Ltd.'s Expancel and Matsumoto Yushi Seiyaku Co., Ltd.'s Matsumoto Microspheres (Saran balloons), Arco Polymers Inc.'s Dylite Expandable Polystyrene and BASF-Wyandotte's Expandable Polystyrene Beads (polystyrene balloons), and JSR Corporation's SX863 (P) (crosslinked styrene-acrylic balloons).

The above-mentioned balloon species may be used singly or two or more of them may be used in admixture. Furthermore, those balloons surface-treated with a fatty acid, a fatty acid ester, rosin, rosin acid lignin, a silane coupling agent, a titan coupling agent, an aluminum coupling agent, polypropylene glycol or the like for improving the dispersibility and the workability of the formulations may also be used. These balloons are used for making the curable composition cotaining them lightweight for cost down without deteriorating the flexibility, expansion and strength among the physical properties after curing the formulation.

The addition amount of the balloon is not particularly restricted but the balloons can be used preferably in an amount within the range of 0.1 to 50 parts by weight, more preferably 0.1 to 30 parts by weight, per 100 parts by weight of the vinyl polymer (I). When this amount is smaller than 0.1 part by weight, the weight-reducing effect is slight and, when it exceeds 50 parts by weight, decreases in tensile strength, among the mechanical properties after curing of the balloon-containing formulations, are observed in some instances. When the balloons have a specific gravity of not lower than 0.1, the addition amount is preferably 3 to 50 parts by weight, more preferably 5 to 30 parts by weight.

### <Plasticizer>

A plasticizer may be incorporated in the curable composition of the invention according to need.

The plasticizer is not particularly limited and may be selected from the following in accordance with the purpose such as adjustment of the physical property, adjustment of the material state and the like: phthalic acid esters such as dibutyl phthalate, diheptyl phthalate, di(2-ethylhexyl)phthalate, butyl benzyl phthalate; non-aromatic dibasic acid esters such as dioctyl adipate, dioctyl sebacate, dibutyl sebacate and isodecyl succinate; aliphatic esters such as butyl oleate and methyl acetyl ricinoleate; polyalkylene glycol esters such as diethylene glycol dibenzoate, triethylene glycol dibenzoate and pentaerythritol ester; phosphoric acid esters such as tricresyl phosphate and tributyl phosphate; trimellitic acid esters; polystyrenes such as polystyrene and poly-α-methylstyrene; polybutadiene, polybutene, polyisobutylene, butadiene-acrylonitrile, polychloroprene; chloro paraffins; hydrocarbon oils such as alkyl diphenyl and partially-hydrogenated tarphenyl; process oils; polyether polyols such as polyethylene glycol, polypropylene glycol and polytetramethylene glycol, polyether-derivatives obtained by converting the hydroxyl groups of the above-mentioned polyether polyols to ester group or ether group etc., and the like polyethers; epoxy plasticizers such as epoxylated soybean oil and benzyl epoxystearate; polyester plasticizers obtained from a dibasic acid such as sebacic acid, adipic acid, azelaic acid and phthalic acid and a dihydric alcohol such as ethylene glycol, diethylene glycol, triethylene glycol, propylene glycol and dipropylene glycol; vinyl polymers obtained by polymerizing vinyl monomers by various methods, e.g. acrylic plasticizers; and the like.

Among them, a polymer plasticizer with a number average molecular weight of 500 to 15,000 is capable of adjusting the viscosity of the curable composition and the mechanical properties such as tensile strength and elongation of the cured product obtained by curing the composition while being added to the composition, and as compared with the case a low molecular plasticizer, that is, a plasticizer containing no polymer component in the molecule, is used, the polymer plasticizer keeps the initial physical properties for a long duration. Therefore, such polymer plasticizer is preferred. Additionally, although it is not limited, the polymer plasticizer may or may not have functional groups.

The number average molecular weight of the above-mentioned polymer plasticizer is 500 to 15,000 and it is preferably 800 to 10, 000 and more preferably 1,000 to 8,000. If the molecular weight is too low, the plasticizer is eluted by heat or rain fall with the lapse of time or the initial physical properties cannot be maintained for a long duration. On the other hand, if the molecular weight is too high, the viscosity becomes high and the workability tends to be worsened.

Among the exemplified polymer plasticizers, ones compatible with the vinyl polymer (I) are preferable. In particular, vinyl polymers are preferable in terms of the compatibility, weather resistance and thermal aging resistance. Among vinyl polymers, (meth) acrylic polymers are preferable, acrylic polymers are more preferable. A synthetic method of the acrylic polymers may be, for example, conventional methods for carrying out solution polymerization and non-solvent acrylic polymer production methods. The latter acrylic plasticizer is produced by high temperature continuous polymerization manner using no solvent or chain transfer agent (reference to U.S. Patent No. 4414370, Japanese Kokai Publication Sho-59-6207, Japanese Kokoku Publication Hei-5-58005, Japanese Kokai Publication Hei-1-313522, U.S. Patent No. 5010166) and these plasticizers are more preferable for the purposes of the invention. Examples of them are not particularly limited and may include, for example, UP series manufactured by Toagosei Co., Ltd. (cf. Kogyo Zairyo, October, 1999). Living radical polymerization method can be exemplified as another synthesis method. According to this method, a preferable polymer with a narrow molecular weight distribution and a low viscosity can be produced and therefore this method is preferable and an atom transfer radical polymerization method is more preferable. However, the methods are not limited to these exemplified methods.

The molecular weight distribution of the polymer plasticizer is not particularly limited, and it is preferable to be narrow and it is preferably lower than 1.8. It is more preferably 1.7 or lower, further preferably 1.6 or lower, furthermore preferably 1.5 or lower, even more preferably 1.4 or lower, and most preferably 1.3 or lower.

The plasticizers including the above-mentioned polymer plasticizers may be used alone or two or more of them may be used in combination, however addition is not necessarily indispensable. Further, if necessary, the polymer plasticizer may be used in combination with a low molecular weight plasticizer to an extent that the physical property is not adversely affected.

The plasticizer may be added at the time of polymer production.

When the plasticizer is used, the use amount of the plasticizer is not limited and 5 to 150 parts by weight, preferably 10 to 120 parts by weight, and further preferably 20 to 100 parts by weight, per 100 parts of the vinyl polymer (I). If it is lower than 5 parts by weight, the effect as a plasticizer tends to be not efficiently caused and if it exceeds 150 parts by weight, the mechanical strength of the cured product tends to become insufficient.

Besides the plasticizer mentioned above, such a reactive diluent as mentioned below may be used in the practice of the invention.

As the reactive diluent, there may be mentioned an organic compound containing at least one alkenyl or alkynyl group capable of being hydrosilylated within the molecule. This organic compound reduces the viscosity of the composition before curing and, at the same time, binds to the SiH group of the hydrosilyl group-containing compound (II) in the manner of hydrosilylation reaction during the curing reaction and is finally incorporated into the network structure.

Therefore, in the practice of the invention, the reactive diluent is not particularly restricted but may be any organic compound containing at least one alkenyl or alkynyl group capable of being hydrosilylated within the molecule. From the viewpoint of good compatibility with the vinyl polymer (I) of the invention, however, a compound having a polar group such as an ester group is preferred. As for the molecular weight, the lower it is, the better the compatibility is and, therefore, a lower level is preferred, although it may be moderately high if the compatibility is sufficient. From the viewpoint of thermal aging resistance and weather resistance, among others, which are characteristic of the cured products obtained from the curable composition of the invention, it is more preferable that the reactive diluent have no carbon-carbon unsaturated bond low in reactivity in hydrosilylation.

If a low-boiling-point compound capable of vaporizing during curing is used as the reactive diluent, deformation may occur after curing as compared with the shape before curing and/or the vapor may adversely affect the environment. Therefore, it is particularly preferable that the reactive diluent be an organic compound having a boiling point of 100°C or higher at ordinary temperature.

Specific examples of the reactive diluent include, but are not limited to, 1-octene, 4-vinylcyclohexene, allyl acetate, 1,1-diacetoxy-2-propene, methyl 1-undecenoate and 8-acetoxy-1,6-octadiene, among others.

The addition amount of the reactive diluent is not particularly restricted if it is within the range within which the three-dimensional crosslinked structure formation by the hydrosilylation reaction between the vinyl polymer (I) and the hydrosilyl group-containing compound (II) is not inhibited. In case the addition amount of the reactive diluent is excessive, the SiH group of the hydrosilyl group-containing compound (II) is consumed by the hydrosilylation reaction with the unsaturated group of the reactive diluent, so that the three-dimensional crosslinked structure formation by the vinyl polymer (I) may become insufficient.

The reactive diluent is used preferably in an amount of 0.1 to 100 parts by weight, more preferably 0.5 to 70 parts by weight, particularly preferably 1 to 50 parts by weight, per 100 parts by weight of the vinyl polymer (I).

### <Solvent>

In the curable composition of the invention, there may be incorporated a solvent according to need.

As examples of the solvent which can be incorporated, there may be mentioned aromatic hydrocarbon solvents such as toluene and xylene; ester type solvents such as ethyl acetate, butyl acetate, amyl acetate and cellosolve acetate; and ketone type solvents such as methyl ethyl ketone, methyl isobutyl ketone and diisobutyl ketone; among others. These solvents may be used on the occasion of polymer production.

### <Adhesion promoter>

In cases where the curable composition of the invention is used by itself as a molding rubber, it is not necessary to add any particular adhesion promoter but, in cases where the composition is used, for example, in two-color molding with another base material, it is possible to add an adhesion promoter incapable of markedly inhibiting the crosslinking reaction between the vinyl polymer (I) and the hydrosilyl group-containing compound (II) in such an amount that the physical properties of the cured products will not be markedly influenced.

The adhesion promoter to be incorporated is not particularly restricted but may be any one capable of imparting adhesiveness to the curable composition. Preferred are, however, crosslinkable silyl group-containing compounds, and silane coupling agents are more preferred.

As specific examples, there may be mentioned alkylalkoxysilanes such as methyltrimethoxysilane, dimethyldimethoxysilane, trimethylmethoxysilane and n-propyltrimethoxysilane; alkylisopropenoxysilanes such as dimethyldiisopropenoxysilane and methyltriisopropenoxysilane; vinyl type unsaturated group-containing silanes such as vinyltrimethoxysilane, vinyldimethylmethoxysilane, vinyltriethoxysilane, γ-methacryloyloxypropylmethyldimethoxysilane and γ-acryloyloxypropylmethyltriethoxysilane; silicone varnishes; and polysiloxanes; among others.

Further, use can also be made of those silane coupling agents which have both an organic group containing an atom or atoms other than carbon and hydrogen atoms, such as an epoxy, isocyanato, isocyanurate, carbamate, amino, mercapto, carboxyl, halogen or (meth) acryl group, within the molecule and a crosslinkable silyl group.

As specific examples thereof, there may be mentioned epoxy group-containing alkoxysilanes such as γ-glycidoxypropylmethyldimethoxysilane, γ-glycidoxypropyltrimethoxysilane, γ-glycidoxypropyltriethoxysilane, β-(3,4-epoxycyclohexyl)ethyltrimethoxysilane, β-(3,4-epoxycyclohexyl)ethyltriethoxysilane, γ-glycidoxypropylmethyldiisopropenoxysilane and like epoxysilanes; isocyanato group-containing alkoxysilanes such as γ-isocyanatopropyltrimethoxysilane, γ-isocyanatopropyltriethoxysilane, γ-isocyantoppropylmethyldiethoxysilane, γ-isocyanatopropylmethyldimethoxysilane and like isocyanato group-containing silanes; isocyanurate group-containing alkoxysilanes such as tris(trimethoxysilyl)isocyanurate and like isocyanurate silanes; amino group-containing alkoxysilanes such as γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane and like amino group-containing silanes; mercapto group-containing alkoxysilanes such as γ-mercaptopropyltrimethoxysilane, γ-mercaptopropyltriethoxysilane, γ-mercaptopropylmethyldimethoxysilane, γ-mercaptopropylmethyldiethoxysilane and like mercapto group-containing silanes; carboxyl group-containing alkoxysilanes such as β-carboxyethyltriethoxysilane, β-carboxyethylphenylbis(2-methoxyethoxy)silane, N-β-(carboxymethyl)aminoethyl-γ-aminopropyltrimethoxysilane and like carboxysilanes; halogen-containing alkoxysilanes such as γ-chloropropyltrimethoxysilane and like halogen-containing silanes; and (meth)acryl group-containing alkoxysilanes such as γ-methacryloxypropyltrimethoxysilane, γ-methacryloxypropyltriethoxysilane, γ-acryloxypropyltrimethoxysilane, γ-acryloxypropyltriethoxysilane, methacryloxymethyltrimethoxysilane, methacryloxymethyltriethoxysilane, acryloxymethyltrimethoxysilane, acryloxymethyltriethoxysilane and like (meth)acryl group-containing silanes.

Also usable as the silane coupling agents are such modifications derived from those mentioned above as amino-modified silyl polymers, silylated aminopolymers, unsaturated aminosilane complexes, phenylamino-long chain alkylsilanes, aminosilylated silicones and silylated polyesters.

Among those mentioned above, alkoxysilanes containing an epoxy group or (meth) acryl group within the molecule are more preferred from the curability and adhesiveness viewpoint.

These may be used singly or two or more of them may be used in combination.

Specific examples of the adhesion promoter other than silane coupling agents are not particularly restricted but include, among others, epoxy resins, phenol resins, sulfur, alkyl titanates and aromatic polyisocyanates.

Further, a crosslinkable silyl group condensation catalyst can be used in combination with the above-mentioned adhesion promoter for further improved adhesiveness. As the crosslinkable silyl group condensation catalyst, there may be mentioned organotin compounds such as dibutyltin dilaurate, dibutyltin diacetylacetonate, dibutyltin dimethoxide and stannous octylate; organoaluminum compounds such as aluminum acetylacetonate; and organotitanium compounds such as tetraisopropoxytitanium and tetrabutoxytitanium; among others.

The above-mentioned adhesion promoter is used preferably in an amount of 0.01 to 20 parts by weight per 100 parts by weight of the vinyl polymer (I). At amounts lower than 0.01 part by weight, the adhesiveness improving effect is insignificant and, at amounts exceeding 20 parts by weight, the physical properties of the cured products tend to become deteriorated. The amount to be added is preferably 0.1 to 10 parts by weight, more preferably 0.5 to 5 parts by weight.

Such adhesion promoters as mentioned above may be used singly or two or more of them may be used in admixture.

### <<Method of producing cured products>>

The cured products obtainable from the above-mentioned curable composition of the invention are described in the following.

In the practice of the invention, the vinyl polymer (I) and the hydrosilyl group-containing compound (II) can be mixed together in an arbitrary ratio. From the curability viewpoint, however, the mole ratio ((B) / (A)) between the alkenyl group in (A) component and the SiH (hydrosilyl) group in (B) component is preferably within the range of 5 to 0.2, particularly preferably 2.5 to 0.4. When the mole ratio is higher than 5, the cured products obtained tend to be low in strength due to insufficient curing and, when it is lower than 0.2, a number of active hydrosilyl groups remain in the cured products even after the step of curing, so that cracks and voids tend to appear, making it difficult to obtain uniform and strong cured products.

In accordance with the present invention, the curable composition is cured by the addition of the SiH group to the alkenyl group in the presence of a hydrosilylation catalyst, so that the rate of curing is very rapid; this is advantageous in line production. In particular, the thermal curing temperature is preferably within the range of 100°C to 180°C. Since the curable composition of the invention is superior in storage stability, the curing reaction will hardly occur at temperatures lower than 100°C but, at temperatures exceeding about 100°C, the hydrosilylation reaction proceeds hastily to give cured products in a short period of time.

The curable composition of the invention shows good storage stability even at relatively high temperatures and thus can be handled at a low viscosity and, therefore, is suited for use in liquid injection molding at elevated temperatures, among others.

For causing the curable composition to flow in the practice of the invention, the temperature therefor is preferably not lower than 30°C but lower than 100°C, more preferably not lower than 40°C but lower than 80°C.

Further, in the practice of the invention, the curable composition can be caused to flow at a temperature not lower than 30°C but lower than 100°C and, further, the curing reaction can be carried out while causing the composition to flow at a temperature not lower than 30°C. Thus, the curable composition of the invention can also be used as a resin for injection molding (e.g. RIM, LIM).

The curable composition of the invention may be prepared as a one-package formulation by compounding together in advance all the components to be compounded and storing the formulation and heating the same for curing on the occasion of curing, or as a two-package or three- or more-package formulation for securing long-term storage stability and mixing up for use the respective components prior to curing.

As to how the compounding components are to be divided into two packages in preparing a two-package formulation, there is no particular restriction. In cases where longer-term storage stability is required, it is desirable that the hydrosilyl group-containing compound and the hydrosilylation catalyst be separated and the (A) component vinyl polymer (I) and the (C) component hydrosilylation catalyst be formulated to give one package composition (composition a) and the (A) component vinyl polymer (I) and the (B) component hydrosilyl group-containing compound be formulated to give the other package composition (composition b). The (D) component phenolic antioxidant, the (E) component sulfur-containing antioxidant, the (F) component reinforcing silica-containing filler, and the curing modifier, metal soap, plasticizer, antioxidant and so forth each may be incorporated in either of che compositions a and b. Considering the stability of each component, it is sometimes recommended that the (D) component phenolic antioxidant, the (E) component sulfur-containing antioxidant, the curing modifier and the metal soap be incorporated in the composition b. For better workability in the step of mixing, the amounts of the materials in each of the compositions a and b are preferably adjusted so that both the compositions may be blended together in equivalent amounts and, more preferably, so that both the compositions may be almost equal in viscosity.

### «Method of molding»

The method of molding for using the curable composition of the invention as molded products is not particularly restricted but various methods of molding in common use can be employed. Thus, mention may be made, for example, casting molding, compression molding, transfer molding, injection molding, extrusion molding, rotational molding, blow molding and thermoforming. In particular, injection molding is preferred in view of the possibility of automation and continuous operation and of high productivity.

### <<Uses>>

Although not being particularly limited, the curable composition of the invention is usable for various uses for electric and electronic parts such as sealants for rear faces of solar cells; insulating materials such as insulating coating materials for electric wires and cables; coating materials, foams, electric and electronic potting agents, films, gaskets, casting materials, artificial marble, various kinds of molding materials, rustproof and waterproof sealants for end faces (cut sections) of net glass or laminated glass; and the like.

The molded product showing rubber elasticity and obtained from the curable composition of the invention can be used widely and mainly for gaskets and packing.

For example, in an automobile field, for vehicle body parts, it can be used for seal materials for keeping air-tightness, vibration-absorption materials for glass, vibration-absorption materials for vehicle body parts, and especially for window seal gaskets and gaskets for door glass. For chassis parts, it can be used as engine and suspension rubber for vibration absorption/noise reduction, particularly for engine mounting rubber. For engine parts, it can be used for hoses for cooling, fuel supply, exhaust control or the like, sealing materials for engine oil, and the like. Further, it can be used for parts of exhaust gas-cleaning apparatus and brake parts.

In a household electrical appliance field, it can be used for packing, 0-rings, belts and the like. More particularly, it can be used ornaments, water-proof packing, vibration-absorption rubber and anti-insect packing for lighting and illuminating appliances, vibration absorption/noise reduction/air seal materials for cleaners, dripping covers, water-proof packing, heater packing, electrode part packing and safety valve diaphragms for electric water heating apparatus, hoses, water-proof packing and electromagnetic valves for sake-heating apparatus, water-proof packing, water supply tank-packing, water-absorbing valves, water-receiving packing, connection hose, belts, heat-insulating heater-packing, steam outlet-sealants and the like for steam oven microwave and jar-type rice cookers, oil packing, O-rings, drain packing, pressure tubes, air blow-tubes, air suction-/blow-packing, vibration-absorption rubber, oil supply port-packing, oil meter-packing, oil sending-pipes, diaphragm valves, gas tubes and the like for combustion apparatuses, speaker gaskets, speaker edge, turn table sheets, belts, pulleys and the like for acoustic appliances, and the like.

In a building and construction field, it can be used for gaskets for structures (zipper gaskets), pneumatic-structure roofings, water-proof materials, shaped sealants, vibration-absorption materials, noise-reduction materials, setting blocks, slide member and the like.

In a sporting field, it can be used for all-weather paving materials, gymnasium floor materials and the like sport floor applications, shoe bottom materials, bottom inserts and the like sport shoes applications, golf balls and the like balls for ball games applications, and the like.

In a field of vibration-absorption rubber, it can be used for vibration-absorption rubber for automobiles, vibration-absorption rubber for railway cars, vibration-absorption rubber for aircrafts, fenders and the like.

In a marine and civil engineering field, it can be used for construction materials such as rubber expansive joints, journals, water-stopping plates, water-proof sheets, rubber dams, elastic paving materials, vibration-absorption pads, and protectors; for sub-materials for working such as rubber frames, rubber packers, rubber skirts, sponge mats, mortar hoses, and mortar strainers; for auxiliary materials for working such as rubber sheets and air hoses; for safety products such as rubber buoyant and wave-absorbing materials; for environment preservation products such as oil fences, silt fences, anti-pollution materials, marine hoses, dredging hoses, and oil skimmers; and the like.

Further, it may be used as rubber plates, mats, foam plates and the like.

### BEST MODE FOR CARRYING OUT THE INVENTION

The following specific examples illustrate the present invention in further detail.

In the examples and comparative examples below, "parts" and "%" represent "parts by weight" and "% by weight", respectively.

### [Determination of molecular weight distribution]

The number average molecular weight and the molecular weight distribution (ratio of the weight average molecular weight to the number average molecular weight) were calculated by a standard polystyrene calibration method using gel permeation chromatography (GPC). In GPC measurement, a polystyrene-crosslinked gel column (Shodex GPC K-804 ; manufactured by Showa Denko K. K.) and chloroform were used as a GPC column and a mobile solvent, respectively.

### [Thermal aging resistance test]

Three 2 cm x 2 cm square sheets were cut out from the cured sheet obtained in each of the examples or comparative examples and the samples were allowed to stand in a 150°C oven (SHPS-212, product of TABAI MFG. Co. LTD.) or a 175°C oven (Hispec HT310, product of Ohken Co., Ltd.) for a predetermined period of time. In the case of standing in the 150°C oven, the samples were measured for the change in hardness after 500 hours, 1,000 hours or 2,000 hours and, in the case of standing in the 175°C oven, the samples were measured for the change in hardness after 168 hours or 500 hours, according to JIS K 6235, for rubber elasticity retention rate evaluation. The hardness of the samples was measured, more specifically, by allowing the square sheets taken out of the oven to stand in a constant-temperature 23°C) room for 1 hour and then placing the three sheets one upon another and subjecting to hardness measurement using a hardness tester (durometer type A, product of Shimadzu

### Corporation).

Further, the appearance of each sample was observed by the eye before and after exposure to elevated temperature (standing in the 150°C or 175°C oven), for discoloration evaluation. Specifically, in the case of standing of the samples in the 150°C oven, the appearance of each sample was observed before standing in the 150°C oven (initially) and after 500 hours of standing in the 150°C oven. In the case of standing of the samples in the 175°C oven, the appearance of each sample was observed before standing in the 175°C oven (initially) and after 168 hours of standing in the 175°C oven. The discoloration of each sample was evaluated in six grades, namely colorless < pale yellow < pale brown < brown < dark brown < black, in the order of increasing discoloration, with the sample slightest in discoloration being evaluated as colorless and the sample severest in discoloration with the loss of rubber elasticity being evaluated as black.

### (Synthesis Example 1)

A 500-mL flask was charged with 1.80 g (12.6 mmol) of copper (I) bromide and 21 mL of acetonitrile, and the charge was heated at 70°C with stirring in a stream of nitrogen for 20 minutes. Thereto were added 5.05 g (14.0 mmol) of diethyl 2,5-dibromoadipate, 60 mL (0.418 mol) of butyl acrylate, 84 mL (0.775 mol) of ethyl acrylate and 63 mL (0.489 mol) of 2-methoxyethyl acrylate, followed by 20 minutes of heating at 80° with stirring. Thereto was added 0.262 mL (1.26 mmol) of pentamethyldiethylenetriamine (hereinafter referred to as "triamine") to initiate the reaction. Further, 0.087 mL (0.42 mmol) of the triamine was added. During continued heating at 80°C with stirring, 0.087 mL (0.42 mmol) of the triamine was added. At 180 minutes after the initiation of the reaction, the reaction vessel inside pressure was reduced for removing the volatile matter. At 240 minutes after the initiation of the reaction, 62 mL of acetonitrile, 62 mL (0.42 mol) of 1, 7-octadiene and 0.87 mL (4. 18 mmol) of the triamine were added, the resulting mixture was continuously heated at 80°C with stirring and, at 620 minutes after the initiation of the reaction, the heating was discontinued. The liquid reaction mixture was heated under reduced pressure to remove the volatile matter and then diluted with toluene and filtered, and the filtrate was concentrated to give a copolymer.

The copolymer obtained was added, together with Kyowaad 500SH (synthetic hydrotalcite, product of Kyowa Chemical Industry Co., Ltd.; 2 parts by weight per 100 parts by weight of the polymer) and Kyowaad 700SL (synthetic aluminum silicate, product of Kyowa Chemical Industry Co. , Ltd.; 2 parts by weight per 100 parts by weight of the polymer), each as an inorganic synthetic adsorbent, to xylene (100 parts by weight per 100 parts by weight of the polymer), and the resulting mixture was stirred at 130°C. After 3 hours, the inorganic synthetic adsorbents were filtered off, and the volatile matter in the filtrate was distilled off by heating under reduced pressure. The copolymer was heated at 180°C (reduced pressure not higher than 10 torr) for 12 hours for volatile matter elimination and Br group elimination from the copolymer. The copolymer was added, together with Kyowaad 500SH (synthetic hydrotalcite, product of Kyowa Chemical Industry Co., Ltd.; 3 parts by weight per 100 parts by weight of the polymer) and Kyowaad 700SL (synthetic aluminum silicate, product of Kyowa Chemical Industry Co., Ltd.; 3 parts by weight per 100 parts by weight of the polymer), each as an inorganic synthetic adsorbent, to xylene (100 parts by weight per 100 parts by weight of the polymer), and the resulting mixture was stirred at 130°C. After 5 hours, the inorganic synthetic adsorbents were filtered off, and the volatile matter in the filtrate was distilled off by heating under reduced pressure, whereby an alkenyl-terminated copolymer [P1] was obtained.

The copolymer [P1] had a number average molecular weight of 18,000 as determined by GPC (on the polystyrene equivalent basis) with a molecular weight distribution of 1.1. The average number of the alkenyl groups introduced per copolymer molecule as determined by ¹H-NMR spectrometry (GEMINI 300: made by Varian Co., Ltd.) was 1.9.

### [Synthesis Example 2]

Copolymer [P2] was obtained in the same manner as in Synthesis Example 1 except that the following compounds were incorporated.
Butyl acrylate: 336 ml (2.34 mol)
Copper (I) bromide: 2.52 g (17.6 mmol)
Diethyl 2,5-dibromoadipate: 5.27 g (14.6 mmol)
Triamine: total 1.83 ml (8.85 mmol)
Acetonitrile: total 168 ml
1,7-Octadiene: 43 ml (0.29 mol)

The Copolymer [P2] obtained had a number average molecular weight of 24, 000 with a molecular weight distribution of 1.2. The average number of the alkenyl groups introduced per copolymer molecule as determined by ¹H-NMR spectrometry was 1.9.

### [Synthesis Example 3]

Copolymer [P3] was obtained in the same manner as in Synthesis Example 1 except that the following compounds were incorporated.
Butyl acrylate: 120 ml (0.84 mol)
Etyl acrylate: 3.8 ml (0.04 mol)
2-Methoxyethyl acrylate: 113 ml (0.87 mol)
Copper (I) bromide: 1.88 g (13.1 mmol)
Diethyl 2,5-dibromoadipate: 3.50 g (9.7 mmol)
Triamine: total 1.37 ml (6.60 mmol)
Acetonitrile: total 95 ml
1,7-Octadiene: 32 ml (0.22 mol)

The copolymer [P3] obtained had a number average molecular weight of 28, 000 with a molecular weight distribution of 1.2. The average number of the alkenyl groups introduced per copolymer molecule as determined by ¹H-NMR spectrometry was 1.8.

### [Synthesis Example 4]

Copolymer [P4] was obtained in the same manner as in Synthesis Example 1 except that the following compounds were incorporated.
Etyl acrylate: 243 ml (2.24 mol)
Copper (I) bromide : 2.42 g (16.9 mmol)
Diethyl 2,5-dibromoadipate : 6.74 g (18.7 mmol)
Triamine: total 1.76 ml (8.40 mmol)
Acetonitrile: total 97 ml
1,7-Octadiene: 83 ml (0.56 mol)

The copolymer [P4] obtained had a number average molecular weight of 15, 000 with a molecular weight distribution of 1.3. The average number of the alkenyl groups introduced per copolymer molecule as determined by ¹H-NMR spectrometry was 1.9.

### [Synthesis Example 5]

Copolymer [P5] was obtained in the same manner as in Synthesis Example 1 except that the following compounds were incorporated.
2-Methoxyethyl acrylate: 222 ml (1.73 mol)
Copper (I) bromide: 1.86 g (13.0 mmol)
Diethyl 2,5-dibromoadipate: 5.19 g (14.4 mmol)
Triamine: total 1.35 ml (6.45 mmol)
Acetonitrile: total 89 ml
1,7-Octadiene: 64 ml (0.43 mol)

The copolymer [P5] obtained had a number average molecular weight of 18, 000 with a molecular weight distribution of 1.2. The average number of the alkenyl groups introduced per copolymer molecule as determined by ¹H-NMR spectrometry was 2.0.

### [Synthesis Example 6]

A 5-liter two-necked flask was charged with 1,200 g of toluene and 760 g of trimethylsilyl-terminated polymethylhydrosiloxane with an average molecular weight of 760 (each molecule containing, on an average, 10 SiH groups), and the charge was heated at 80°C with stirring on an oil bath under nitrogen. To this solution was added dropwise over 60 minutes a mixed solution composed of 710 g of α-methylstyrene, 700 g of toluene and 144 µl of a solution of a platinum-vinylsiloxane complex in xylene (platinum content 3% by weight). The resulting solution as such was warmed with stirring for 6 hours. The unreacted α-methylstyrene and toluene were distilled off under reduced pressure, whereby a hydrosilyl group-containing compound [C1] was obtained.

Upon ¹H-NMR analysis, the hydrosilyl group-containing compound [C1] was found to be a linear methylpolysiloxane containing, on an average, 5 hydrosilyl groups and, on an average, 5 α-methylphenethyl groups within the molecule (although the hydrosilyl group-containing compound [C1] was a mixture, it contained, as the main component, the linear methylpolysiloxane containing, on an average, 5 hydrosilyl groups and, on an average, 5 α-methylphenethyl groups within the molecule).

### [Synthesis Example 7]

A 5-liter two-necked flask was charged with 1,800 g of toluene and 1,440 g of 1,3,5,7-tetramethylcyclotetrasiloxane, and the charge was heated at 120°C with stirring on an oil bath under nitrogen. To this solution was added dropwise over 50 minutes a mixed solution composed of 200 g of triallyl isocyanurate, 200 g of toluene and 144 µl of a solution of a platinum-vinylsiloxane complex in xylene (platinum content 3% by weight). The resulting solution as such was warmed with stirring for 6 hours. After 2.95 mg of 1-ethynyl-1-cyclohexanol was added, the unreacted 1,3,5,7-tetramethylcyclotetrasiloxane and toluene were distilled off under reduced pressure, whereby a hydrosilyl group-containing compound [C2] was obtained.

Upon ¹H-NMR analysis, the hydrosilyl group-containing compound [C2] was found to be the product of reaction of part of the SiH groups in the 1, 3, 5, 7-tetramethylcyclotetrasiloxane with triallyl isocyanurate (although the hydrosilyl group-containing compound [C2] was a mixture, it contained, as the main component, the compound shown below, with 9 SiH groups within the molecule).

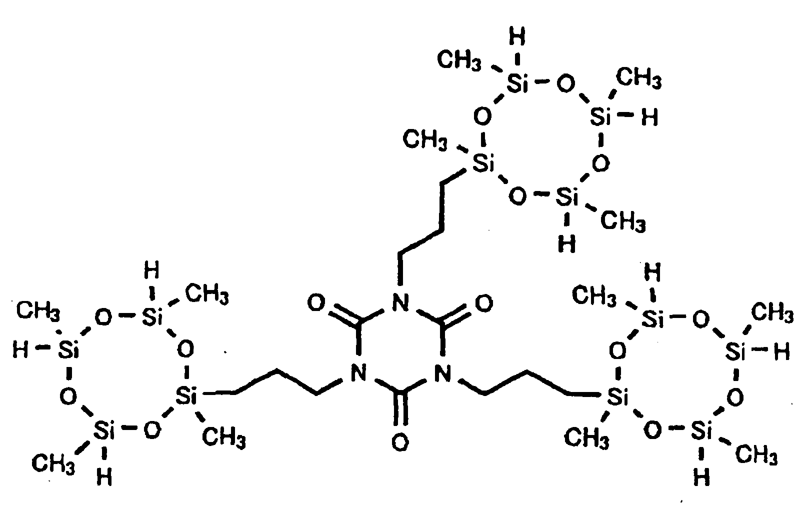

### (Example 1)

In 100 parts of the copolymer [P1] obtained in Synthesis Example 1, there were incorporated 20 parts of Aerosil R974 (average primary particle diameter 12 nm; product of Nippon Aerosil Co., Ltd.) as a reinforcing silica, 1 part of calcium stearate (product name: SC-100, product of Sakai Chemical Industry Co., Ltd.) as a metal soap, 1 part of tetrakis[methylene-3-(3,5-di-tert-butyl-4-hydroxyphenyl) propionato]methane (product name: Irganox 1010, product of Ciba Specialty Chemicals) as a phenolic antioxidant, and 1 part of pentaerythrityl tetrakis (3-laurylthiopropionate) (product name: Sumilizer TP-D, product of Asahi Denka Co., Ltd.) as a sulfur-containing antioxidant, and the whole was thoroughly homogenized using a three-roll paint mill. Thereafter, the hydrosilyl group-containing compound [C1] containing, on an average, 5 hydrosilyl groups and, on an average, 5 α-methylphenethyl groups within the molecule was added to the copolymer [P1] in an amount corresponding to 1.8 mole equivalents of the SiH groups in [C1] relative to the alkenyl group in the copolymer [P1], and a solution of platinum(0)-1,1,3,3-tetramethyl-1,3-divinyldisiloxane complex in xylene (platinum content 3% by weight) was added in an amount of 5 x 10⁻⁴ mole equivalents on the platinum basis relative to the alkenyl group in the copolymer [P1], and 3,5-dimethyl-1-hexyn-3-ol (product name: SURFYNOL 61, product of Nissin Chemical Industry Co., Ltd.) was added as a curing modifier in an amount of 150 mole equivalents relative to the platinum catalyst, followed by further homogenization to give a curable composition.

The thus-obtained curable composition was thoroughly degassed in a vacuum oven at 50°C and then poured into a mold, followed by 10 minutes of press curing at 180°C, further followed by 22 hours of postcuring in an oven at 180°C, to give a rubber-like cured sheet with a thickness of about 2 mm.

The cured sheet obtained was subjected to the thermal aging resistance test at 150°C.

### (Examples 2 to 8)

Various rubber-like cured sheets were produced in the same manner as in Example 1 except that A1 to A3 described below were added as a phenolic antioxidant, and a1 to a4 were used as a sulfur-containing antioxidant, in various amounts (parts), and these cured sheets were also subjected to the thermal aging resistance test at 150°C.

### (Example 9)

A rubber-like cured sheet was produced in the same manner as in Example 1 except that 100 parts by weight of the copolymer [22] obtained in Synthesis Example 2 was used, as the vinyl polymer (I), in lieu of the copolymer [P1], and the cured sheet was also subjected to the thermal aging resistance test at 150°C.

### (Example 10)

A rubber-like cured sheet was produced in the same manner as in Example 1 except that 100 parts by weight of the copolymer [P3] obtained in Synthesis Example 3 was used, as the vinyl polymer (I), in lieu of the copolymer [P1], and the cured sheet was also subjected to the thermal aging resistance test at 150°C.

### (Example 11)

A rubber-like cured sheet was produced in the same manner as in Example 1 except that 100 parts by weight of the copolymer [P4] obtained in Synthesis Example 4 was used, as the vinyl polymer (I), in lieu of the copolymer [P1], and the cured sheet was also subjected to the thermal aging resistance test at 150°C.

### (Example 12)

A rubber-like cured sheet was produced in the same manner as in Example 1 except that 100 parts by weight of the copolymer [P5] obtained in Synthesis Example 5 was used, as the vinyl polymer (I), in lieu of the copolymer [P1], and the cured sheet was also subjected to the thermal aging resistance test at 150°C.

### (Example 13)

A rubber-like cured sheet was produced in the same manner as in Example 1 except that 1.8 mole equivalents of the hydrosilyl group-containing compound [C2] obtained in Synthesis Example 7 was used as the hydrosilyl group-containing compound (II), and the cured sheet was also subjected to the thermal aging resistance test at 150°C.

### (Example 14)

A rubber-like cured sheet was produced in the same manner as in Example 1 except that 1-ethynyl-1-cyclohexanol was used as a curing modifier, and the cured sheet was also subjected to the thermal aging resistance test at 150°C.

### (Comparative Examples 1 to 14)

Various rubber-like cured sheets were produced in the same manner as in Example 1 except that an antioxidant was incorporated in different amounts (parts), and the cured sheets were also subjected to the thermal aging resistance test at 150°C.

When each phenolic antioxidant was used singly as the antioxidant, the antioxidant at a low addition amount was low in ability to retain rubber elasticity in the 150°C heat resistance test and, after 500 to 1,000 hours, the cured products became hard and resinous (Comparative Examples 1 to 11). When the addition amount (parts) of the phenolic antioxidant was increased to retain rubber elasticity, the period of rubber elasticity retention was prolonged but the cured products were found discolored after the thermal aging resistance test. When the phosphorus-containing antioxidant (B1) known as a secondary antioxidant was used, no cured products were obtained (Comparative Example 12). With the amine type antioxidant (B2) commonly used as an antioxidant in acrylic rubbers, rubber elasticity was retained even after 2,000 hours but the cured products showed a dark brown color from the initial stage (Comparative Examples 13 and 14). On the contrary, the combined use of a phenolic antioxidant and a sulfur-containing antioxidant resulted in rubber elasticity retention even after 2,000 hours and no or only slight discoloration after the heat resistance test.

### (Examples 15 to 26)

Various rubber-like cured sheets were produced in the same manner as in Example 1 except that A1 to A6 described below were added as a phenolic antioxidant, and a1, a2, a5 and a6 were used as a sulfur-containing antioxidant, in various amounts (parts by weight), and these cured sheets were also subjected to the thermal aging resistance test at 175°C.

### (Comparative Examples 15 to 24)

Various rubber-like cured sheets were produced in the same manner as in Example 1 except that an antioxidant was incorporated in different amounts (parts), and the cured sheets were also subjected to the thermal aging resistance test at 175°C.

When each phenolic antioxidant was used singly as the antioxidant, the antioxidant at a low addition amount was low in ability to retain rubber elasticity and, after 168 hours, the cured products became hard and resinous (Comparative Example 15). When the addition amount (parts) was increased to retain rubber elasticity, the cured products became hard and resinous and were found discolored after 500 hours. With the amine type antioxidant (B2) commonly used as an antioxidant in acrylic rubbers, the rubber elasticity was lost in 168 hours at low addition amounts and the increase in addition amount resulted in rubber elasticity retention but in dark brown discoloration already in the initial stage (Comparative Examples 19 to 21). In the case of combined use of an amine type antioxidant and a sulfur-containing antioxidant, an improvement with respect to initial discoloration was achieved but the cured products showed a dark brown color after the thermal aging resistance test (Comparative Examples 22 and 23). In the case of single use of a sulfur-containing antioxidant, the rubber elasticity was not retained after the thermal aging resistance test; the discoloration could not be prevented, either (Comparative Example 24). On the contrary, the combined use of a phenolic antioxidant and a sulfur-containing antioxidant resulted in rubber elasticity retention even after 168 hours and, when a phenolic antioxidant having a molecular weight of not lower than 600 (A1, A2 or A3) was used in combination with a sulfur-containing antioxidant having a molecular weight of not lower than 1,000 (a1), the rubber elasticity could be retained even after 500 hours.

### <Phenolic antioxidant>

A1:
   tetrakis[methylene-3-(3,5-di-tert-butyl-4-hydroxyphenyl) propionato]methane (product name: Irganox 1010, product of Ciba Specialty Chemicals., molecular weight; 1,178)
A2: 3,9-bis{2-[3-(3-tert-butyl-4-hydroxy-5-methylphenyl) propionyloxy]-1,1-dimethylethyl}-2,4,8,10-tetraoxaspiro [5.5]undecane (product name: Sumilizer GA-80, product of Sumitomo Chemical Co., Ltd., molecular weight ; 741)
A3: tris[N-(3,5-di-tert-butyl-4-hydroxybenzyl)]isocyanurate (product name : Adekastab AO-20, product of Asahi Denka Co., Ltd., molecular weight; 784)
A4: 1,3,5-trimethyl-2,4,6-tris(3,5-di-tert-butyl-4 -hydroxybenzyl) benzene (product name: Irganox 1330, product of Ciba Specialty Chemicals, molecular weight; 775)
A5: 2,2'-methylenebis(4-ethyl-6-tert-butylphenol) (product name: Sumilizer MDP-S, product of Sumitomo Chemical Co., Ltd., molecular weight; 341)
A6: 4,4'-butylidenebis(3-methyl-6-tert-butylphenol) (product name: Sumilizer BBM-S, product of Sumitomo Chemical Co., Ltd., molecular weight; 383)
A7: 1,6-hexanediol bis[3-(3,5-di-tert-butyl-4-hydroxyphenyl)propionate] (product name: Irganox 259, product of Ciba Specialty Chemicals, molecular weight; 639)
A8: triethylene glycol bis[3-(3-tert-butyl-4-hydroxy-5-methylphenyl)propionate] (product name: Irganox 245, product of Ciba Specialty Chemicals, molecular weight; 587)

### <Sulfur-containing antioxidant>

a1: pentaerythrityl tetrakis(3-laurylthiopropionate) (product name: Sumilizer TP-D, product of Sumitomo Chemical Co., Ltd., molecular weight; 1,162)
a2: distearyl thiodipropionate (product name: Sumilizer TPS, product of Sumitomo Chemical Co., Ltd., molecular weight; 683)
a3: 4,6-bis[(octylthio)methyl]-o-cresol (product name: Irganox 1520, product of Ciba Specialty Chemicals, molecular weight; 425)
a4:
   2,2-thiodiethylenebis[3-(3,5-di-tert-butyl-4-hydroxyphenyl) propionate] (product name: Irganox 1035, product of Ciba Specialty Chemicals, molecular weight; 643)
a5: dilauryl thiodipropionate (product name: Sumilizer TPL-R, product of Sumitomo Chemical Co., Ltd., molecular weight; 515)
a6: dimyristyl 3, 3' -thiodipropionate (product name: Sumilizer TPM, product of Sumitomo Chemical Co., Ltd., molecular weight; 571)

### <Other antioxidant>

B1: tris 2,4-di-tert-butylphenyl)phosphite (product name: Adekastab 2112, product of Asahi Denka Co., Ltd., 647)
B2: 4,4'-(α,α-dimethylbenzyl)diphenylamine (product name: Nocrac CD, product of Ouchi Shinko Chemical Industrial Co., Ltd., molecular weight; 406)

### INDUSTRIAL APPLICABILITY

The curable composition of the invention is a curable composition which comprises a vinyl polymer capable of providing cured products generally showing good mechanical characteristics, oil resistance and weather resistance, among others, and can be cured by the hydrosilylation reaction, and the cured product obtained from the curable composition shows excellent hardness retention and discoloration resistance in thermal aging resistance testing.

## Claims

1. A curable composition
which comprises:
(A) A vinyl polymer (I) having, within the molecule, at least one alkenyl group capable of being hydrosilylated,
(B) A hydrosilyl group-containing compound (II),
(C) A hydrosilylation catalyst,
(D) A phenolic antioxidant, and
(E) A sulfur-containing antioxidant.

2. The curable composition according to Claim 1
wherein the molecular weight distribution of the vinyl polymer (I) is less than 1.8.

3. The curable composition according to Claim 1 or 2
wherein the main chain of the vinyl polymer (I) is produced mainly by polymerizing a monomer selected from the group consisting of (meth)acrylic monomers, acrylonitrile monomers, aromatic vinyl monomers, fluorine-containing vinyl monomers and silicon-containing vinyl monomers.

4. The curable composition according to any one of Claims 1 to 3
wherein the vinyl polymer (I) is a (meth) acrylic polymer.

5. The curable composition according to any one of Claims 1 to 4
wherein the vinyl polymer (I) is an acrylic polymer.

6. The curable composition according to any one of Claims 1 to 5
wherein the vinyl polymer (I) is an acrylate polymer.

7. The curable composition according to any one of Claims 1 to 6
wherein the main chain of the vinyl polymer (I) is produced by the living radical polymerization.

8. The curable composition according Claim 7
wherein the living radical polymerization is the atom transfer radical polymerization.

9. The curable composition according Claim 8
wherein the atom transfer radical polymerization is carried out using, as the catalyst, a complex selected from the group consisting of transition metal complexes composed of VII, VIII, IX, X, or XI group element in the periodic table as a central metal.

10. The curable composition according Claim 9
wherein the transition metal complex is one selected from the group consisting of copper, nickel, ruthenium and iron complexes.

11. The curable composition according Claim 10
wherein the transition metal complex is a copper complex.

12. The curable composition according to any one of Claims 1 to 11
wherein the vinyl polymer (I) is obtained by the following steps:
(1a) Polymerizing a vinyl monomer by atom transfer radical polymerization to produce a vinyl polymer having a terminal structure represented by the general formula 1:
-C(R¹)(R²)(X) (1)
(wherein R¹ and R² represent the groups bound to the ethylenically unsaturated group in the vinyl monomer and X represents chlorine, bromine or iodine), and
(2a) Converting the terminal halogen of said polymer to a substituent having an alkenyl group capable of being hydrosilylated.

13. The curable composition according to anyone of Claims 1 to 11
wherein the vinyl polymer (I) is a vinyl polymer obtained by the following steps:
(1b) Polymerizing a vinyl monomer by living radical polymerization to produce a vinyl polymer, and
(2) Subjecting said polymer to reaction with a compound having at least two low polymerizability alkenyl groups.

14. The curable composition according to any one of Claims 1 to 13
wherein the vinyl polymer (I) has a terminal alkenyl group capable of being hydrosilylated.

15. The curable composition according to any one of Claims 1 to 14
wherein (B) hydrosilyl group-containing compound (II) is an organohydrogen polysiloxane.

16. The curable composition according to any one of Claims 1 to 15
wherein (D) phenolic antioxidant has a molecular weight of not lower than 600.

17. The curable composition according to any one of Claims 1 to 16
wherein (E) sulfur-containing antioxidant has a thioether structure.

18. The curable composition according to any one of Claims 1 to 17
wherein (E) sulfur-containing antioxidant has a molecular weight of not lower than 1,000.

19. The curable composition according to any one of Claims 1 to 18
which further comprises (F) reinforcing silica.

20. A cured product obtained from the curable composition according to any one of Claims 1 to 19.

## Patentansprüche

1. Härtbare Zusammensetzung, die umfaßt:
(A) ein Vinylpolymer (1), das innerhalb des Moleküls mindestens eine Alkenylgruppe aufweist, die hydrosiliert werden kann,
(B) eine hydrosilangruppenhaltige Verbindung (II),
(C) einen Hydrosilierungkatalysator,
(D) ein phenolisches Antioxidationsmittel, und
(E) ein schwefelhaltiges Antioxidationsmittel.

2. Härtbare Zusammensetzung nach Anspruch 1,
wobei die Molekulargewichtsverteilung des Vinylpolymers (I) kleiner als 1,8 ist.

3. Härtbare Zusammensetzung nach einem der Ansprüche 1 oder 2,
wobei die Hauptkette des Vinylpolymers (I) hauptsächlich durch Polymerisation eines Monomers, das aus einer Gruppe bestehend aus (meth)acrylischen Monomeren, Acrylonitrilmonomeren, aromatischen Vinylmonomeren, fluorhaltigen Vinylmonomeren und siliciumhaltigen Monomeren ausgewählt wird, hergestellt ist.

4. Härtbare Zusammensetzung nach einem der Ansprüche 1 bis 3,
wobei das Vinylpolymer (I) ein (meth)acrylisches Polymer ist.

5. Härtbare Zusammensetzung nach einem der Ansprüche 1 bis 4,
wobei das Vinylpolymer (I) ein Acrylpolymer ist.

6. Härtbare Zusammensetzung nach einem der Ansprüche 1 bis 5,
wobei das Vinylpolymer (I) ein Acrylatpolymer ist.

7. Härtbare Zusammensetzung nach einem der Ansprüche 1 bis 6,
wobei die Hauptkette des Vinylpolymers (I) durch eine lebende Radikalpolymerisation entsteht.

8. Härtbare Zusammensetzung nach Anspruch 7,
wobei die lebende Radikalpolymerisation die Atomtransfer-Radikalpolymerisation ist.

9. Härtbare Zusammensetzung nach Anspruch 8,
wobei die Atomtransfer-Radikalpolymerisation unter Verwendung eines Komplexes, der aus Transitionsmetallkomplexen mit einem Zentralmetall der VII, VIII, IX, X oder XI Elementgruppe des Periodensystems bestehenden Gruppe ausgewählt ist, als Katalysator durchgeführt wird.

10. Härtbare Zusammensetzung nach Anspruch 9,
wobei der Transitionsmetallkomplex aus einer aus Kupfer-, Nickel-, Ruthenium- und Eisenkomplexen bestehenden Gruppe ausgewählt ist.

11. Härtbare Zusammensetzung nach Anspruch 10,
wobei der Transitionsmetallkomplex ein Kupferkomplex ist.

12. Härtbare Zusammensetzung nach einem der Ansprüche 1 bis 11,
wobei das Vinylpolymer (I) durch die folgenden Schritte erhalten ist:
(1a) Polymerisation eines Vinylmonomers durch Atomtransfer-Radikalpolymerisation zur Erzeugung eines Vinylpolymers mit einer Endstruktur, welche durch die allgemeine Formel 1 dargestellt ist:
-C(R¹)(R²)(X) (1)
(wobei R¹ und R² die Gruppen, die an der ethylenisch ungesättigten Gruppe des Vinylmonomers gebunden sind, darstellen und X Chlor, Brom oder lod darstellt), und
(2a) Konvertierung des Endhalogens des Polymers zu einem Substituenten mit einer Alkenylgruppe, die hydrosyliert werden kann.

13. Härtbare Zusammensetzung nach einem der Ansprüche 1 bis 11,
wobei das Vinylpolymer (I) ein Vinlypolymer ist, welches durch folgende Schritte erzeugt wird:
(1 b) Polymerisation eines Vinylmonomers durch lebende Radikalpolymerisation zur Erzeugung eines Vinylpolymers, und
(2) Unterziehen des Polymers einer Reaktion mit einer Verbindung, die mindestens zwei niedrigpolymerisierbare Alkenylgruppen besitzt.

14. Härtbare Zusammensetzung nach einem der Ansprüche 1 bis 13,
wobei das Vinylpolymer (I) eine Alkenyl-Endgruppe, die hydrosiliert werden kann, besitzt.

15. Härtbare Zusammensetzung nach einem der Ansprüche 1 bis 14,
wobei (B) hydrosilangruppenhaltige Verbindung (II) ein organohydrogenes Polysiloxan ist.

16. Härtbare Zusammensetzung nach einem der Ansprüche 1 bis 15,
wobei (D) phenolisches Antioxidationsmittel ein Molekulargewicht nicht kleiner als 600 hat.

17. Härtbare Zusammensetzung nach einem der Ansprüche 1 bis 16,
wobei (E) schwefelhaltiges Antioxidationsmittel eine Thioetherstruktur hat.

18. Härtbare Zusammensetzung nach einem der Ansprüche 1 bis 17,
wobei (E) schwefelhaltiges Antioxidationsmittel ein Molekulargewicht nicht kleiner als 1.000 hat.

19. Härtbare Zusammensetzung nach einem der Ansprüche 1 bis 18,
welche ferner (F) verstärkende Kieselsäure umfaßt.

20. Gehärtetes Produkt, erhalten aus der härtbaren Zusammensetzung nach einem der Ansprüche 1 bis 19.

## Revendications

1. Composition durcissable qui comprend :
(A) un polymère vinylique (I) ayant, au sein de la molécule, au moins un groupe alcényle susceptible d'être hydrosilylé,
(B) un composé (II) contenant un groupe hydrosilyle,
(C) un catalyseur d'hydrosilylation,
(D) un antioxydant phénolique, et
(E) un antioxydant contenant du soudre.

2. Composition durcissable selon la revendication 1, où la distribution de masse moléculaire du polymère vinylique (I) est inférieure à 1,8.

3. Composition durcissable selon la revendication 1 ou 2, où la chaîne principale du polymère vinylique (I) est produite principalement par polymérisation d'un monomère choisi dans le groupe constitué de monomères (méth)acrylique, de monomères d'acrylonitrile, de monomères vinyliques aromatiques, de monomères vinyliques contenant du fluor et de monomères vinyliques contenant du silicium.

4. Composition durcissable selon l'une quelconque des revendications 1 à 3, où le polymère vinylique (I) est un polymère (méth)acrylique.

5. Composition durcissable selon l'une quelconque des revendications 1 à 4, où le polymère vinylique (I) est un polymère acrylique.

6. Composition durcissable selon l'une quelconque des revendications 1 à 5, où le polymère vinylique (I) est un polymère de type acrylate.

7. Composition durcissable selon l'une quelconque des revendications 1 à 6, où la chaîne principale du polymère vinylique (I) est produite par la polymérisation radicalaire vivante.

8. Composition durcissable selon la revendication 7, où la polymérisation radicalaire vivante est la polymérisation radicalaire par transfert d'atome.

9. Composition durcissable selon la revendication 8, où la polymérisation radicalaire par transfert d'atomes est mise en oeuvre en utilisant comme catalyseur un complexe sélectionné dans le groupe constitué de complexes de métaux de transition composés d'un élément du groupe VII, VIII, IX, X ou XI de la table périodique des éléments en tant que métal central.

10. Composition durcissable selon la revendication 9, où le complexe de métal de transition est un complexe sélectionné dans le groupe constitué des complexes du cuivre, du nickel, du ruthénium et du fer.

11. Composition durcissable selon la revendication 10, où le complexe de métal de transition est un complexe du cuivre.

12. Composition durcissable selon l'une quelconque des revendications 1 à 11, où le polymère vinylique (I) est obtenu par les étapes suivantes :
(1a) polymérisation d'un monomère vinylique par polymérisation radicalaire par transfert d'atomes pour produire un polymère vinylique ayant une structure terminale représentée par la formule générale 1 :
-C(R¹)(R²)(X) (1)
(où R¹ et R² représentent les groupes liés au groupe éthyléniquement insaturé dans le monomère vinylique et X représente le chlore, le brome ou l'iode), et
(2a) la conversion de l'halogène terminal dudit polymère en un substituant ayant un groupe alcényle susceptible d'être hydrosilylé.

13. Composition durcissable selon l'une quelconque des revendications 1 à 11, où le polymère vinylique (I) est un polymère vinylique obtenu par les étapes suivantes :
(1b) polymérisation d'un monomère vinylique par polymérisation radicalaire vivante pour produire un polymère vinylique, et
(2) soumission dudit polymère à une réaction avec un composé ayant au moins deux groupes alcényle faiblement polymérisables.

14. Composition durcissable selon l'une quelconque des revendications 1 à 13, où le polymère vinylique (I) a un groupe alcényle terminal susceptible d'être hydrosilylé.

15. Composition durcissable selon l'une quelconque des revendications 1 à 14, où le composé (II) contenant un groupe hydrosilyle (B) est un organohydrogénopolysiloxane.

16. Composition durcissable selon l'une quelconque des revendications 1 à 15, où l'antioxydant phénolique (D) a une masse moléculaire supérieure ou égale à 600.

17. Composition durcissable selon l'une quelconque des revendications 1 à 16, où l'antioxydant contenant du soufre (E) a une structure thioéther.

18. Composition durcissable selon l'une quelconque des revendications 1 à 17, où l'antioxydant contenant du soufre (E) a une masse moléculaire supérieure ou égale à 1 000.

19. Composition durcissable selon l'une quelconque des revendications 1 à 18, laquelle comprend en outre de la silice de renfort (F).

20. Produit durci obtenu à partir de la composition durcissable selon l'une quelconque des revendications 1 à 19.
